# EUROPÄISCHE PATENTSCHRIFT

(11) **EP 2 638 442 B1**
(45) Veröffentlichungstag und Bekanntmachung des Hinweises auf die Patenterteilung: **16.12.2020**
(21) Anmeldenummer: 11782551.3
(22) Anmeldetag: 07.11.2011
(51) Int. Cl.: G05B 15/02, G05B 13/04, F24F 11/00, G05D 23/19

(54) **GEBÄUDEAUTOMATIONSSYSTEM**
BUILDING AUTOMATION SYSTEM
SYSTÈME D'AUTOMATISATION DU BÂTIMENT

(30) Priorität: 08.11.2010 DE 102010050726
(43) Veröffentlichungstag der Anmeldung: 18.09.2013
(73) Patentinhaber: Werner Sobek AG, 70597 Stuttgart (DE)
(72) Erfinder: SOBEK, Werner, 70180 Stuttgart (DE); HAASE, Walter, 71157 Hildrizhausen (DE); BUSSE, Jonathan, 70180 Stuttgart (DE); WITTE, Christoph, 70193 Stuttgart (DE)
(74) Vertreter: Kotitschke, Bernd
(86) Internationale Anmeldenummer: PCT/EP2011/005589
(87) Internationale Veröffentlichungsnummer: WO 2012/062442

(56) Entgegenhaltungen:
- EP-A2- 2 009 358
- US-A1- 2003 149 539
- Oldewurtel F; Parisio A; Jones C N; Morari M; Gyalistras D; Gwerder M; Stauch V; Lehmann B; Wirth K: "Energy efficient building climate control using Stochastic Model Predictive Control and weather predictions", 2010 American Control Conference - ACC 2010, 30. Juni 2010 (2010-06-30), Seiten 5100-5105, XP002667037, Gefunden im Internet: URL:http://ieeexplore.ieee.org/xpls/abs_al l.jsp?arnumber=5530680&tag=1 [gefunden am 2012-01-12]
- CIAT: "BEDIENUNGSANLEITUNG FÜR DIE REGELUNG Nr. 940 E . 2008 / 01 Elektronische Regelung GESCLIMA PRO Luft-Luft-Geräte", Internet, 1. Januar 2008 (2008-01-01), Seiten 1-55, XP002667038, Gefunden im Internet: URL:http://www.ciat.com/fichier/montageanl eitung_rooftop_new_space_regelung_gesclima _pro.pdf [gefunden am 2012-01-12]

## Beschreibung

Die Erfindung betrifft ein Betriebsverfahren für ein Gebäudeautomationssystem und ein entsprechendes Gebäudeautomationssystem, Steuersystem, Computerprogramm, Computerprogrammprodukt, computerlesbares Erzeugnis und einen entsprechenden Computer bzw. eine entsprechende Datenverarbeitungseinheit wie etwa einen Mikrocontroller oder Prozessor.

Aus dem Stand der Technik sind Regelungssysteme für Haus- oder Gebäudeautomationssysteme bekannt, die eine oder mehrere raumklimatische Größen den Wünschen der Nutzer oder zentral definierten Anforderungen entsprechend anpassen können. US 2003/149539 A1 z. B. offenbart, aktuelle Energiepreise in die Temperatursteuerung einfließen zu lassen und in Abhängigkeit einer Nutzervorgabe eine Abweichung von einer Wunschtemperatur zuzulassen. "Energy efficient building climate control using Stochastic Model Predictive Control and weather predictions" (OLDEWURTEL ET AL.) offenbart ein numerisches Gebäudesimulationsmodell unter simulierter Einbeziehung der Wettervorhersage. EP 2 009 358 A2 offenbart ein Regelverfahren, das auf einem Rechensimulationsmodell basiert.

Nachteilig ist, dass in den bekannten Regelungssystemen nicht alle theoretisch möglichen Maßnahmen oder Maßnahmenkombinationen zur Beeinflussung des Raumklimas berücksichtbar und ausnutzbar sind. Es gibt meistens für jede raumklimatische Größe einen eigenen Regelkreis. Der Heizungsregelkreis beispielsweise erfasst die Ist-Temperatur, fragt eine Soll-Temperatur ab und ergreift eine Maßnahme wie Heizen oder Kühlen, um den Ist-Wert dem Soll-Wert anzugleichen. Wird beispielsweise eine Überschreitung des Soll-Wertes festgestellt, wird die entsprechende Gegenmaßnahme eingeleitet (Kühlen). Ob es vielleicht noch andere Maßnahmen gibt, die zur energieeffizienten Lösung des Problems beitragen (z.B. Verschatten), wird nicht in Betracht gezogen. Daher arbeiten herkömmliche Gebäudeautomationssysteme oft nicht energieeffizient, weil die für die Beeinflussung des Raumklimas notwendigen Maßnahmen schlecht koordiniert oder überhaupt nicht koordiniert ausgeführt werden.

Ferner können herkömmliche Regelungssysteme nicht erfassen, wie viel Zeit und wie viel Energie benötigt wird, um ein gewünschtes Gebäudezonenklima zu erreichen und zu halten. Daher ist es mit herkömmlichen Regelungssystemen nicht möglich, zu entscheiden, ob ein Raum besonders energieeffizient oder besonders schnell konditioniert werden soll.

Um mit herkömmlichen Regelungssystemen gute Energieeinsparwerte zu erzielen, müssen die Regelungssysteme gebäudespezifisch programmiert und parametrisiert werden (z.B. Ausrichtung, Verschattung, thermische Trägheit, usw.). Die Parameter müssen durch ein kompliziertes und kostspieliges Simulationsverfahren ermittelt werden.

In Anbetracht obiger Ausführungen wird es Fachleuten anhand dieser Offenbarung ersichtlich, dass ein Bedarf an der Lösung oder Überwindung oben beschriebener Probleme oder Nachteile besteht. Diese Erfindung bezieht sich auf diesen Bedarf des Standes der Technik sowie auf andere Bedürfnisse, die Fachleuten anhand dieser Offenbarung ersichtlich werden. Gemäß der Erfindung wird ein Betriebsverfahren für ein Gebäude- bzw. Hausautomationssystem bereitgestellt, z.B. zur Klimatisierung zumindest einer Gebäudezone und/oder zum Kontrollieren (z.B. Steuern bzw. Regeln) oder Überwachen zumindest einer Maßnahme zum Beeinflussen des Gebäudezonenklimas oder zumindest einer Funktionseinrichtung (z.B. Sensoren, elektrische Verbraucher, Funktionseinheiten, etc.) des Gebäudeautomationssystems und/oder zum vorzugsweise sensorischen Erfassen von Größen, die das Gebäudezonenklima (Innenklima) bzw. das Außenklima beschreiben.

Zumindest eine Information (insbesondere eine Erfahrungsinformation und/oder Gebäudezonenklimaverhaltensinformation, nachfolgend als Erfahrungsinformation bezeichnet) wird bereitgestellt (insbesondere ermittelt) und/oder gesammelt (vorzugsweise gespeichert), die zumindest einen erbrachten Zeitaufwand zur Erzielung zumindest eines bestimmten Gebäudezonenklimas und/oder zumindest einer bestimmten Gebäudezonenklimaveränderung beschreibt.

Zumindest eine Information (insbesondere eine Erfahrungsinformation und/oder Gebäudezonenklimaverhaltensinformation, nachfolgend als Erfahrungsinformation bezeichnet) wird bereitgestellt (insbesondere ermittelt) und/oder gesammelt (insbesondere gespeichert), die zumindest einen erbrachten Energieaufwand zur Erzielung zumindest eines bestimmten Gebäudezonenklimas und/oder zumindest einer bestimmten Gebäudezonenklimaveränderung beschreibt.

Zumindest ein (zu erwartender) erforderlicher Zeitaufwand zur Erzielung zumindest eines zu erreichenden Gebäudezonenklimas und/oder zumindest einer zu erreichenden Gebäudezonenklimaveränderung wird ermittelt (insbesondere berechnet) und vorzugsweise angezeigt. Zumindest ein (zu erwartender) erforderlicher Energieaufwand zur Erzielung zumindest eines zu erreichenden Gebäudezonenklimas und/oder zumindest einer zu erreichenden Gebäudezonenklimaveränderung wird ermittelt (insbesondere berechnet) und vorzugsweise angezeigt. Das Ermitteln erfolgt unter Verwendung der zumindest einen Erfahrungsinformation.

Mittels der Erfindung kann auf vorteilhafte Art und Weise ein erforderlicher Energieaufwand und/oder Zeitaufwand ermittelt werden, um zumindest ein zu erreichendes Gebäudezonenklima und/oder zumindest eine zu erreichende Gebäudezonenklimaveränderung zu erzielen.

Es ist möglich, dass zumindest eine Maßnahme zur Beeinflussung des Gebäudezonenklimas ermittelt (insbesondere berechnet) und vorzugsweise angezeigt wird, mittels der zumindest ein zu erreichendes Gebäudezonenklima und/oder zumindest eine zu erreichende Gebäudezonenklimaveränderung zeitoptimiert (vorzugsweise schnellstmöglich) und/oder energieoptimiert (vorzugsweise mit geringst möglichen Energieaufwand) erzielbar ist. Ferner ist es möglich, dass zumindest eine Maßnahme zur Beeinflussung des Gebäudezonenklimas ermittelt (insbesondere berechnet) und vorzugsweise angezeigt wird, mittels der zumindest ein zu erreichendes Gebäudezonenklima und/oder zumindest eine zu erreichende Gebäudezonenklimaveränderung mit einer vom Nutzer vorgebbaren Präferenz erzielbar ist. Das Ermitteln erfolgt unter Verwendung der zumindest einen Erfahrungsinformation.

Mittels der Erfindung kann auf vorteilhafte Art und Weise zumindest eine Maßnahme zur Beeinflussung des Gebäudezonenklimas ermittelt werden, mit der zumindest ein zu erreichendes Gebäudezonenklima und/oder zumindest eine zu erreichende Gebäudezonenklimaveränderung erzielbar ist bzw. zumindest ein erreichtes Gebäudezonenklima und/oder zumindest eine erreichte Gebäudezonenklimaveränderung haltbar ist.

Die vom Nutzer vorgebbare Präferenz ist vorzugsweise eine energetische-zeitliche Präferenz bzw. eine Präferenz, die eine energetisch-zeitliche-Gewichtung umfasst.

Insbesondere kann die vom Nutzer vorgebbare Präferenz eine zeiteffizienzbezogene und/oder energieeffizienzbezogene Präferenz umfassen. Beispielsweise kann die Präferenz eine Gewichtung hinsichtlich Zeiteffizienz und/oder Energieeffizienz umfassen (z.B. 100% energieeffizient (energieoptimiert) bzw. 0% zeiteffizient, 80% energieeffizient bzw. 20% zeiteffizient, 50% energieeffizient bzw. 50% zeiteffizient, oder 0% energieeffizient bzw. 100% zeiteffizient (zeitoptimiert)).

Die vom Nutzer vorgebbare Präferenz kann somit vorzugsweise einen Kompromiss darstellen betreffend energieoptimierter Vorgehensweise und/oder zeitoptimierter Vorgehensweise, kann aber auch die energieoptimierte bzw. die zeitoptimierte Vorgehensweise umfassen.

Der Nutzer kann ferner auf vorteilhafte Art und Weise vor bzw. während des Betriebs zwischen einer energieoptimierten (oder zumindest relativ energieeffizienten) oder einer zeitoptimierten (oder zumindest relativ schnellen) oder einer dazwischenliegenden Erfüllung des zu erreichenden Gebäudezonenklimas wählen.

Mittels der Erfindung kann ein energieeffizientes Handeln bewusst gefördert werden und gleichzeitig das Gefühl relativiert werden, von einem System bevormundet zu werden, da gegebenenfalls eine Nutzer-Entscheidung zugunsten eines energieeffizienten oder gar energieoptimierten Betriebs vorausgehen kann.

Nachfolgend wird vereinzelt anstatt "Gebäudezonenklima und/oder Gebäudezonenklimaveränderung" der Kürze wegen nur das "Gebäudezonenklima" genannt, wobei jedoch alternativ oder ergänzend auch die "Gebäudezonenklimaveränderung" umfasst ist.

Das Klima im Sinne der Erfindung kann zumindest eines von Folgenden umfassen bzw. beschreiben: Lufttemperatur, Helligkeit, vorzugsweise relative Luftfeuchtigkeit, Kohlenstoffdioxid-Konzentration, Oberflächentemperatur zumindest einer Gebäudezonenbegrenzung (z.B. Wand, Decke und/oder Boden), Windstärke, Bewölkung, solare Einstrahlung, Beleuchtungsstärke, Leuchtdichte, Luftströmungsgeschwindigkeit. Das Klima kann entsprechend dem Gebäudezonenklima (Innenklima) und/oder dem Außenklima zugeordnet werden.

Das Klima kann eine oder mehrere klimatische Größen bzw. eine oder mehrere klimatische Werte (z.B. Lufttemperatur 20°, relative Luftfeuchtigkeit rF 60%) umfassen. Somit kann das Klima im Sinne der Erfindung nur eine einzige klimatische Größe oder aber eine Vielzahl klimatischer Größen umfassen.

Die Klimaveränderung kann eine Veränderung einer oder mehrerer klimatischer Größen bzw. eines oder mehrerer klimatischer Werte umfassen.

Insbesondere umfasst das bestimmte Gebäudezonenklima und/oder das zu erreichende oder erreichte Gebäudezonenklima im Sinne der Erfindung zumindest eines von Folgenden: zumindest einen Gebäudezonenklima-Sollwert bzw. zumindest eine Gebäudezonenklima-Sollgröße (vorzugsweise eindimensional), zumindest einen Gebäudezonenklima-Sollwertebereich (vorzugsweise mehrdimensional), zumindest ein Gebäudezonenklima-Sollszenario, das zumindest zwei zu erreichende Gebäudezonenklima-Sollgrößen aufweist. Ähnliches gilt insbesondere auch für die bestimmte und/oder zu erreichende Gebäudezonenklimaveränderung.

Vorzugsweise bezieht sich das zu erreichende Gebäudezonenklima auf ein zukünftig zu erreichendes Gebäudezonensollklima und das erreichte Gebäudezonenklima auf ein bereits erreichtes Gebäudezonenklima, während sich das bestimmte Gebäudezonenklima vorzugsweise auf ein in der Vergangenheit erreichtes oder gehaltenes Gebäudezonensollklima bezieht. Das gleiche gilt vorzugsweise auch für die zu erreichende bzw. erreichte Gebäudezonenklimaveränderung und die bestimmte Gebäudezonenklimaveränderung.

Es ist möglich, aber nicht erforderlich, dass das im Bereitstellungs- bzw. Sammelschritt genannte bestimmte Gebäudezonenklima identisch ist zu dem im Ermittlungsschritt genannten zu erreichenden oder erreichten Gebäudezonenklima. Ähnliches gilt insbesondere auch für die im Bereitstellungs- bzw. Sammelschritt genannte bestimmte Gebäudezonenklimaveränderung und die im Ermittlungsschritt genannte zu erreichende oder erreichte Gebäudezonenklimaveränderung und insbesondere die gegebenenfalls genannten gegebenen Randbedingungen und Maßnahmen zur Beeinflussung des Gebäudezonenklimas.

Die Gebäudezone umfasst vorzugsweise einen oder mehrere Innenräume und kann z.B. ferner eine Wohnung oder ein gesamtes Gebäude bzw. Haus umfassen.

Mittels des Schritts der Bereitstellung und/oder des Sammelns der zumindest einen Erfahrungsinformation kann vorteilhaft das klimatische Verhalten der Gebäudezone unter Berücksichtigung gegebener und/oder sich ändernder Randbedingungen und/oder unter Berücksichtigung bzw. Zuordnung zumindest einer Einwirkung zumindest einer Maßnahme zur Beeinflussung des Gebäudezonenklimas ermittelt bzw. (vorzugsweise fortlaufend) empirisch erlernt werden.

Die Randbedingungen können gebäudezonenspezifisch (z.B. thermische Trägheit, Standort, Fensterflächen, Zimmerhöhe, etc.), gebäudeautomationssystemspezifisch (z.B. Energieverbrauch, Leistungsvermögen, Effizienz etc. zumindest einer Maßnahme zur Beeinflussung des Gebäudezonenklimas oder anderer Funktionseinrichtungen) und/oder klimaspezifisch (z.B. Außentemperatur, Innentemperatur, etc.) sein.

Der Schritt des Ermittelns erfolgt unter Verwendung der zumindest einen Erfahrungsinformation, wodurch vorteilhaft das (insbesondere erfahrungsgemäße) klimatische Verhalten der Gebäudezone einbeziehbar ist, insbesondere unter Berücksichtigung gegebener bzw. sich ändernder Randbedingungen und vorzugsweise unter Berücksichtigung bzw. Zuordnung zumindest einer Einwirkung zumindest einer Maßnahme zur Beeinflussung des Gebäudezonenklimas.

Damit wiederum ist es vorteilhaft möglich, zu ermitteln, wie viel Zeit und/oder Energie benötigt wird, um ein zu erreichendes Gebäudezonenklima und/oder eine zu erreichende Gebäudezonenklimaveränderung zu erzielen bzw. zu halten.

Mittels der Erfindung ist es somit vorteilhaft möglich, das Fehlen bestimmter gebäudezonenspezifischer Kenngrößen und gebäudeautomationsspezifischer Kenngrößen durch die Erfahrungsinformationen zu kompensieren. Herkömmlich müssten z.B. die gebäudezonenspezifischen Kenngrößen und die gebäudeautomationsspezifischen Kenngrößen im Voraus aufwendig mittels Simulationsmodellen näherungsweise ermittelt werden. Ein besonderer Vorteil der Erfindung ist somit, dass bei der Installation oder Anpassung des Gebäudeautomationssystems, insbesondere dessen Regelungs- bzw. Steuersystems keine gebäudezonenspezifischen Parameter oder Regelungsprinzipien einprogrammiert oder geändert werden müssen. Daraus resultiert ein geringerer Installationsaufwand, der mit einer Kostenreduktion verbunden ist. Der Betrieb wird komfortabler und ferner erhöht sich die Nutzerakzeptanz.

Vorteilhaft ist weiter, dass alle oder zumindest eine Vielzahl von Maßnahmen zur Beeinflussung des Gebäudezonenklimas und insbesondere deren Wechselwirkungen bei der Bereitstellung (bzw. Sammlung) und/oder Ermittlung berücksichtigt werden können. Dadurch kann ein größtmöglicher Handlungsspielraum erreicht werden, um ein zu erreichendes Gebäudezonenklima zu erzielen oder ein erreichtes Gebäudezonenklima zu halten.

Ferner ist es möglich, dass die Erfahrungsinformation die Wirksamkeit zumindest einer Maßnahme zur Beeinflussung des Gebäudezonenklimas umfasst (die z.B. für das Erzielen eines zu erreichenden Gebäudezonenklimas auszuführen ist). Die Wirksamkeit einer Maßnahme zur Beeinflussung des Gebäudezonenklimas erschließt sich z.B. aus der Änderung, die diese Maßnahme auf das Gebäudezonenklima in einer gewissen Zeit erwirken kann. Ist die Änderungsrate einer Maßnahme und das Verhalten der Gebäudezone unter den gegebenen Randbedingungen bekannt, kann der erforderliche Zeitaufwand zur Erzielung eines zu erreichenden Gebäudezonenklimas approximiert werden.

Das Bereitstellen und/oder Sammeln im Sinne der Erfindung umfasst jedwede Art und Weise, die geeignet ist, die Erfahrungsinformation zu beschaffen bzw. zu ermitteln und/oder zu verwalten bzw. zu speichern.

Ein weiterer Vorteil der Erfindung ist, dass das Gebäudeautomationssystem, insbesondere dessen Regelungs- bzw. Steuersystem im Prinzip universell anwendbar ist für nahezu alle Gebäudezonen und Gebäude.

Vorteilhaft können mittels der Erfindung Regelungs- bzw. Steuerfunktionen automatisch durch das Einlernen der jeweils relevanten Sensoren und Maßnahmen (bzw. Aktuatoren) zur Beeinflussung des Gebäudezonenklimas verknüpft werden, wodurch das System vorzugsweise beliebig skalierbar ist, ohne dass ein zusätzlicher Installations- bzw. Programmieraufwand nötig ist.

Der Nutzer kann ferner vorteilhaft vor bzw. während des Betriebs über den noch zu verrichtenden (und/oder bereits erbrachten) Energieaufwand und den noch verbleibenden (und/oder den bereits verstrichenen) Zeitaufwand, bis ein zu erreichendes Gebäudezonenklima erzielt wird, informiert werden. Das erhöht den Komfort und die Nutzerakzeptanz.

Mittels der Erfindung kann auf vorteilhafte Art und Weise eine vorausschauende und/oder exakte Aussage getroffen werden, wie viel Energie zum Erzielen zumindest eines zu erreichenden Gebäudezonenklimas bzw. zum Halten eines erreichten Gebäudezonenklimas erforderlich ist. Dies kann insbesondere erreicht werden, indem der Energieverbrauch (z.B. Watt-Zahl der angeschlossenen Beleuchtung), der zum Erzielen aufgewendet werden muss, (also z.B. Heizung 0-100% oder Aktivierung des Sonnenschutzes) erfasst, ermittelt oder manuell eingegeben und abgespeichert wird. Da der Zeitaufwand der zumindest einen Maßnahme zur Beeinflussung des Gebäudezonenklimas errechnet werden kann, ist die Berechnung des gesamten Energieverbrauchs zum Erzielen zumindest eines zu erreichenden Gebäudezonenklimas unter Berücksichtigung der gegebenen Randbedingungen möglich.

Der Nutzer kann vorzugsweise eine Zeit (Zeitpunkt bzw. Zeitraum) für das Erzielen des zu erreichenden Gebäudezonenklimas vorgeben. In einem Simulations- und Evaluationsprozess kann eine Strategie zur Auswahl und Koordination der zumindest einen Maßnahme zur Beeinflussung des Gebäudezonenklimas ermittelt werden, um das zu erreichende Gebäudezonenklima unter den gegebenen Randbedingungen zeitoptimiert, energieoptimiert oder unter Berücksichtigung der vom Nutzer vorgebbaren dazwischenliegenden Präferenz zu erzielen.

Der (zu erwartende) erforderliche Zeitaufwand ist ein Mindestzeitaufwand, während der (zu erwartende) erforderliche Energieaufwand ein Mindestenergieaufwand ist, um ein zu erreichendes Gebäudezonenklima zu erzielen.

Ferner ist es möglich, dass eine Nutzervorgabeinformation bzw. Nutzerbefehlsinformation berücksichtigt bzw. eingelesen wird.

Die Nutzerbefehlsinformation kann z.B. das zu erreichende Gebäudezonenklima umfassen.

Ebenso kann die Nutzerbefehlsinformation insbesondere die Zeit (Zeitpunkt bzw. Zeitraum) umfassen, zu der das zu erreichende Gebäudezonenklima zu erzielen ist.

Ferner kann die Nutzerbefehlsinformation umfassen, ob das zu erreichende Gebäudezonenklima mit dem Mindestzeitaufwand (bzw. zeitoptimiert) oder mit dem Mindestenergieaufwand (bzw. energieoptimiert) zu erzielen ist.

Auch kann die Nutzerbefehlsinformation umfassen, mit welcher Präferenz das zu erreichende Gebäudezonenklima zu erzielen bzw. zu halten ist. Die Präferenz kann zwischen Mindestzeitaufwand (bzw. zeitoptimiert) und Mindestenergieaufwand (bzw. energieoptimiert) liegen und somit einen Energie-Zeit-Kompromiss darstellen.

Mittels der Erfindung ist es möglich, dass mehrere unterschiedliche Maßnahmen zur Beeinflussung des Gebäudezonenklimas ermittelt werden, mit denen das zu erreichende Gebäudezonenklima vorzugsweise zu einer vom Nutzer vorgebbaren Zeit erzielbar ist.

Die Nutzerbefehlsinformation kann somit vorzugsweise umfassen, welche aus der Vielzahl von Maßnahmen zur Beeinflussung des Gebäudezonenklimas ausgeführt werden soll.

Vorzugsweise wird zumindest eine Maßnahme zur Beeinflussung des Gebäudezonenklimas ausgeführt, die geeignet ist, zumindest eine Nutzervorgabe zu erfüllen.

Die Nutzervorgabe umfasst insbesondere zumindest eines von Folgenden: das zu erreichende Gebäudezonenklima, die zu erreichende Gebäudezonenklimaveränderung, die Präferenz, die Zeit, zu der das zu erreichende Gebäudezonenklima und/oder die zu erreichende Gebäudezonenklimaveränderung erzielt werden soll, wann zumindest eine Maßnahme zur Beeinflussung des Gebäudezonenklimas ausgeführt werden soll.

Das Bereitstellen bzw. Sammeln und/oder das Ermitteln kann zumindest zeitweise während des Betriebs des Gebäudeautomationssystems, zu vom Nutzer vorgebbaren Intervallen bzw. zu vom Nutzer vorgebbaren Zeiten (Zeitpunkte bzw. Zeiträume) erfolgen, wenn eine einzige Maßnahme zur Beeinflussung des Gebäudezonenklimas ausgeführt wird und/oder vor bzw. während Ausführens zumindest einer Maßnahme zur Beeinflussung des Gebäudezonenklimas. Vorzugsweise erfolgt das Ermitteln iterativ, insbesondere mittels eines endlichen Iterations- und/oder Bewertungsverfahrens.

Das Gebäudeautomationssystem kann zumindest einen Nutzeranwesenheitssensor zum Erfassen der Anwesenheit oder der Nichtanwesenheit eines Nutzers umfassen.

Das Bereitstellen bzw. Sammeln und/oder das Ermitteln kann ferner insbesondere erfolgen, wenn kein Nutzer in der Gebäudezone anwesend ist, was vorteilhaft mittels des Nutzeranwesenheitssensors erfasst oder manuell vom Nutzer vorgebbar ist.

Das Auswerten der zumindest einen Erfahrungsinformation ist insbesondere dann effizient, wenn eine einzelne Maßnahme oder eine Änderung unter gleichbleibenden Bedingungen beobachtet und erfasst werden kann. Da dies im Fall der Anwesenheit von Nutzern nicht immer möglich ist, kann in einer Phase der Abwesenheit die Kalibrierung verschiedener Maßnahmen unter den gegebenen Randbedingungen durchgeführt werden.

Die Erfindung umfasst vorzugsweise eine Prozedur, die unter Berücksichtigung der bereits gesammelten Erfahrungsinformationen entscheidet, ob das derzeitige Ist-Klima bzw. die derzeitige Klimatisierung die Sammlung von Erfahrungsinformationen sinnvoll ergänzen kann und daher aufzuzeichnen ist oder nicht.

Je mehr Erfahrungsinformationen vorliegen und insbesondere je größer der Datenbestand ist, der das bisherige klimatische Verhalten der Gebäudezone beschreibt, desto höher ist die Genauigkeit der Ermittlung z.B. des erforderlichen Energieaufwands, Zeitaufwands und/oder zumindest einer Maßnahme zur Beeinflussung des Gebäudezonenklimas, um Nutzervorgaben zu erfüllen.

Ferner ist es möglich, dass zumindest eine Größe (bzw. Wert) eingelesen und/oder mittels vorzugsweise zumindest eines Sensors erfasst wird, die das Gebäudezonenklima und/oder das Außenklima beschreibt.

Ebenso ist es möglich, dass zumindest eine Größe (bzw. Wert) eingelesen und/oder mittels vorzugsweise zumindest eines Sensors erfasst wird, die den Energieverbrauch, die Klimatisierungseffizienz und/oder das Leistungsverhalten zumindest einer Maßnahme zur Beeinflussung des Gebäudezonenklimas beschreibt.

Ferner kann zumindest eine Größe (bzw. Wert) erfasst und/oder eingelesen werden, die den Zustand oder das Verhalten zumindest einer Maßnahme zur Beeinflussung des Gebäudezonenklimas beschreibt (z.B. Zustandswerte bzw. Verhaltensweisen der Aktuatoren der Maßnahmen).

Ferner kann zumindest eine Größe (bzw. Wert) eingelesen werden, die ein voraussichtliches Außenklima und/oder Gebäudezonenklima beschreibt.

Darüber hinaus können Wetterdaten, Wettervorhersagedaten und/oder Sonnenstandsdaten für den Standort des Gebäudes eingelesen und/oder vorzugsweise automatisch abgerufen oder berechnet werden.

Die Wettervorhersagedaten können z.B. die zu einer bestimmten Zeit (Zeitpunkt bzw. Zeitraum) voraussichtliche Außenlufttemperatur, Windstärke, Luftfeuchtigkeit und Bewölkung umfassen.

Ferner ist es möglich, dass allgemeingültige Kalenderdaten und/oder nutzerspezifische Kalenderdaten eingelesen und/oder vorzugsweise automatisch abgerufen werden.

Das Erfassen, Einlesen und/oder Abrufen kann zumindest zeitweise während des Betriebs des Gebäudeautomationssystems erfolgen, zu vom Nutzer vorgebbaren Intervallen, zu vom Nutzer vorgebbaren Zeiten (Zeitpunkte bzw. Zeiträume), wenn eine einzige Maßnahme zur Beeinflussung des Gebäudezonenklimas ausgeführt wird oder vor bzw. während Ausführens zumindest einer Maßnahme zur Beeinflussung des Gebäudezonenklimas.

Das Erfassen, Einlesen und/oder Abrufen kann ferner insbesondere erfolgen, wenn kein Nutzer in der Gebäudezone anwesend ist, was vorteilhaft mittels des Nutzeranwesenheitssensors erfasst oder manuell vom Nutzer vorgebbar ist.

Das Bereitstellen (bzw. Sammeln) und/oder Ermitteln kann insbesondere unter Berücksichtigung von zumindest einem von Folgenden erfolgen: zumindest einer Größe, die das Außenklima und/oder das Gebäudezonenklima beschreibt, zumindest einer Größe, die den Energieverbrauch, die Klimatisierungseffizienz und/oder das Leistungsverhalten zumindest einer Maßnahme zur Beeinflussung des Gebäudezonenklimas beschreibt, zumindest einer Größe, die den Zustand bzw. das Verhalten zumindest einer Maßnahme zur Beeinflussung des Gebäudezonenklimas beschreibt, zumindest einer Größe, die ein voraussichtliches Außenklima und/oder Gebäudezonenklima beschreibt, Wetterdaten, Wettervorhersagedaten, Sonnenstandsdaten für den Standort des Gebäudes, allgemeingültige und/oder nutzerspezifische Kalenderdaten. Die Daten bzw. Größen können eingelesen, abgerufen, z.B. sensorisch erfasst, berechnet oder auf andere geeignete Art und Weise vorgesehen werden.

Besonders vorteilhaft ist, dass ein (zu erwartender) erforderlicher Zeitaufwand und/oder Energieaufwand ermittelbar ist, um zumindest ein zu erreichendes Gebäudezonenklima und/oder zumindest eine zu erreichende Gebäudezonenklimaveränderung bis zu einer vom Nutzer vorgebbaren Zeit (Zeitpunkt bzw. Zeitraum) zu erzielen.

Es ist möglich, einen spätmöglichsten Zeitpunkt zu ermitteln, zu dem zumindest eine Maßnahme zur Beeinflussung des Gebäudezonenklimas zu aktivieren bzw. auszuführen ist, so dass zumindest ein zu erreichendes Gebäudezonenklima zu einer vom Nutzer vorgebbaren Zeit (Zeit bzw. Zeitraum) erzielt wird, wodurch eine überflüssige klimatische Konditionierung der Gebäudezone vermeidbar ist.

Insbesondere kann zum spätmöglichsten Zeitpunkt mit der Klimatisierung der Gebäudezone begonnen werden und/oder für die verbleibende Zeit zumindest eine Maßnahme zur Beeinflussung des Gebäudezonenklimas ermittelt werden, um das zumindest eine zu erreichende Gebäudezonenklima und/oder die zumindest eine Gebäudezonenklimaveränderung zeitoptimiert und/oder energieoptimiert zu erzielen oder mit einer vom Nutzer vorgebbaren Präferenz zu erzielen.

Insbesondere kann zumindest eine Maßnahme zur Beeinflussung des Gebäudezonenklimas zum spätmöglichsten Zeitpunkt vorzugsweise automatisch oder mittels einer einlesbaren Nutzerbefehlsinformation aktiviert werden.

Es ist auch möglich, dass ermittelt und vorzugsweise angezeigt wird, wie viel Zeit verbleibt und/oder wie viel Energie noch erforderlich ist, bis ein zu erreichendes Gebäudezonenklima und/oder eine zu erreichende Gebäudezonenklimaveränderung erzielt wird.

Es ist möglich, dass die zumindest eine Maßnahme zur Beeinflussung des Gebäudezonenklimas eine Vielzahl von (z.B. unterschiedlichen vorzugsweise sich gegenseitig beeinflussenden) Maßnahmen (z.B. Maßnahmenkombinationen und/oder eine Maßnahmenreihenfolgen) umfasst, die beispielsweise sukzessive und/oder zeitgleich ausgeführt werden können. Es ist aber auch möglich, dass die zumindest eine Maßnahme zur Beeinflussung des Gebäudezonenklimas nur eine Einzelmaßnahme umfasst.

Die zumindest eine Maßnahme zur Beeinflussung des Gebäudezonenklimas kann eine Klimatisierungstätigkeit und/oder eine Klimatisierungseinrichtung umfassen.

Die zumindest eine Maßnahme zur Beeinflussung des Gebäudezonenklimas kann insbesondere zumindest eines von Folgenden umfassen: Heizen (erhöhen der Gebäudezonentemperatur), Kühlen (verringern der Gebäudezonentemperatur), Lüften, Verändern des Verschattungsverhältnisses, Verändern des Beleuchtungsverhältnisses, Verändern der Luftfeuchtigkeit, Verändern der Kohlenstoffdioxid-Konzentration, Heizeinrichtung, Klimaanlageneinrichtung, Lüftungseinrichtung, Wärmerückgewinnungseinrichtung, Verschattungseinrichtung, Beleuchtungseinrichtung, Fenster-Öffnungs-/Schließ-Einrichtung. Die zumindest eine Maßnahme zur Beeinflussung des Gebäudezonenklimas kann ferner ein vollständiges Deaktivieren bestimmter Klimatisierungstätigkeiten und/oder Klimatisierungseinrichtungen umfassen (z.B. Ausschalten der Heizeinrichtung, Ausschalten der Beleuchtungseinrichtung, usw.).

Es ist möglich, dass zumindest eine Maßnahme zur Beeinflussung des Gebäudezonenklimas ausgeführt wird, um das zumindest eine zu erreichende oder erreichte Gebäudezonenklima und/oder die zumindest eine zu erreichende oder erreichte Gebäudezonenklimaveränderung zeitoptimiert und/oder energieoptimiert zu erzielen bzw. zu halten oder mit der vom Nutzer vorgebbaren Präferenz zu erzielen bzw. zu halten.

Um das zumindest eine zu erreichende oder erreichte Gebäudezonenklima und/oder die zumindest eine zu erreichende oder erreichte Gebäudezonenklimaveränderung zeitoptimiert und/oder energieoptimiert zu erzielen bzw. zu halten oder mit der vom Nutzer vorgebbaren Präferenz zu erzielen bzw. zu halten, ist es möglich, dass das Betriebsverfahren den Schritt des vorzugsweise autonomen und/oder selbstständigen bzw. automatischen Ausführens und/oder Anpassens zumindest einer Maßnahme zur Beeinflussung des Gebäudezonenklimas basierend auf oder reagierend auf zumindest einem von Folgenden umfasst: zumindest einer vorzugsweise im Wesentlichen aktuell erfassten Randbedingung, zumindest einer sich ändernden oder zumindest im Wesentlichen aktuell veränderten Randbedingung, zumindest einer Einwirkung zumindest einer Maßnahme zur Beeinflussung des Gebäudezonenklimas, zumindest einer erfassten und/oder eingelesen Größe, eingelesener und/oder abgerufener Wetterdaten und/oder Wettervorhersagedaten, eingelesener und/oder berechneter Sonnenstandsdaten, eingelesener und/oder abgerufener allgemeingültiger und/oder nutzerspezifischer Kalenderdaten, zumindest einer Nutzervoreinstellung.

Vorteilhaft kann das Betriebsverfahren bzw. das Gebäudeautomationssystem somit beispielsweise auf einen oder mehrere Nutzereingriffe reagieren, insbesondere auf (vorzugsweise manuelle) Eingriffe des Nutzers zum Verändern des Gebäudezonenklimas (wie etwa Öffnen eines Fensters, Einschalten der Beleuchtung, usw.).

Es ist möglich, dass das Betriebsverfahren bzw. das Gebäudeautomationssystem vorteilhaft autonom und/oder selbstständig bzw. automatisch funktioniert, z.B. basierend auf einer Nutzervoreinstellung bzw. Nutzervorgabe (z.B. ein vom Nutzer im Voraus definierter bzw. ausgewählter Betriebsmodus oder anderweitige Vorgaben).

Die Randbedingung kann die Gebäudezone betreffen (z.B. Nutzeran- bzw. Abwesenheit, durch Nutzereingriff(e) hervorgerufene Änderung(en), das Gebäudezonenklima, zu- bzw. abnehmende Personenanzahl, eine CO2-Veränderung, etc.), das Gebäudeautomationssystem betreffen (z.B. durch Nutzereingriff(e) hervorgerufene Änderung(en), Maßnahmen zur Beeinflussung des Gebäudezonenklimas, Funktionseinrichtungen, etc.) und/oder das Gebäudezonenklima bzw. das Außenklima betreffen (z.B. Temperaturänderungen, etwa ein Temperatursturz oder zeitweise veränderte Bewölkung, zu- bzw. abnehmende Personenanzahl, CO2-Veränderung, etc.). Es ist ersichtlich, dass eine Randbedingung mehreren der Gebäudezonen, des Gebäudeautomationssystems und des Gebäudezonenklimas bzw. Außenklimas zugeordnet werden kann.

Es ist möglich, dass mehrere oder sogar alle gebäudezonenklimatische Größen und/oder mehrere oder sogar alle Maßnahmen zur Beeinflussung des Gebäudezonenklimas und vorzugsweise mehrere oder alle Funktionseinrichtungen bzw. Funktionseinheiten mittels des gleichen Kontrollkreises (Steuerkreis bzw. Regelkreis) und/oder Überwachungskreises kontrolliert (gesteuert bzw. geregelt) und/oder überwacht werden.

Vorzugsweise umfasst das erfindungsgemäße Regelungs- bzw. Steuermodell nur die allgemeingültigen Zusammenhänge, also die Auswirkungen und Wechselwirkungen der Maßnahmen (z.B. Heizung eingeschaltet erzeugt Wärme, natürliche Belüftung sorgt für eine Angleichung der Innen- und Außentemperatur, Verschattung bedingt eine Verdunklung etc.). Dieses Grundgerüst an Regelungswissen ist universell für die Raumkonditionierung gültig und demnach ortsunabhängig anwendbar.

Insbesondere gebäudezonenspezifische, standortspezifische und/oder gebäudeautomationsspezifische Randbedingungen können während der Installation oder im Betrieb erfasst und eingelernt und vorzugsweise fortlaufend verfeinert werden.

Es ist möglich, dass wenn eine Funktionseinrichtung (z.B. Sensoren, Klimatisierungseinrichtungen, elektrische Verbraucher, Aktuatoren, Funktionseinheiten, usw.) in das Gebäudeautomationssystem aufgenommen wird (z.B. mit einem Regler verbunden wird), diese in ihrer Funktion (z.B. Messglied, Stell- bzw. Klimatisierungsglied) erkannt und entsprechend automatisch eingebettet wird.

Die Erfindung ist nicht auf ein wie oben beschriebenes Betriebsverfahren beschränkt, sondern umfasst auch ein Gebäudeautomationssystem und/oder ein Steuersystem (umfassend ein Regelungssystem), insbesondere zum Ausführen des Betriebsverfahrens wie hierin beschrieben.

Das System kann vorgesehen sein zur Klimatisierung zumindest einer Gebäudezone und/oder zum Kontrollieren (z.B. Steuern bzw. Regeln) oder Überwachen zumindest einer Maßnahme zum Beeinflussen des Gebäudezonenklimas oder zumindest einer Funktionseinrichtung (z.B. Sensoren, elektrische Verbraucher, Funktionseinheiten, etc.) des Gebäudeautomationssystems und/oder zum vorzugsweise sensorischen Erfassen von Größen, die das Gebäudezonenklima (Innenklima) bzw. das Außenklima beschreiben.

Das erfindungsgemäße System umfasst eine Bereitstellungs- und/oder Sammeleinheit (z.B. eine Datenbank), die konfiguriert ist, um zumindest eine Erfahrungsinformation bereitzustellen bzw. zu sammeln, die zumindest einen erbrachten Zeitaufwand und/oder Energieaufwand zur Erzielung zumindest eines bestimmten Gebäudezonenklimas und/oder zumindest einer bestimmten Gebäudezonenklimaveränderung beschreibt.

Das System umfasst eine Ermittlungseinheit, die konfiguriert ist, um zumindest einen (zu erwartenden) erforderlichen Zeitaufwand und/oder zumindest einen (zu erwartenden) erforderlichen Energieaufwand zur Erzielung zumindest eines zu erreichenden Gebäudezonenklimas und/oder zumindest einer zu erreichenden Gebäudezonenklimaveränderung unter Verwendung der zumindest einen Erfahrungsinformation zu ermitteln.

Das System umfasst eine Ermittlungseinheit, die konfiguriert ist, um zumindest eine Maßnahme zur

Beeinflussung des Gebäudezonenklimas, mittels der zumindest ein zu erreichendes Gebäudezonenklima und/oder zumindest eine zu erreichende Gebäudezonenklimaveränderung zeitoptimiert und/oder energieoptimiert erzielbar ist oder mittels einer vom Nutzer vorgebbaren Präferenz erzielbar ist, unter Verwendung der zumindest einen Erfahrungsinformation zu ermitteln.

Bei den Ermittlungseinheiten (die vorzugsweise Recheneinheiten umfassen) kann es sich um eine einzige Ermittlungseinheit handeln. Es ist aber auch möglich, dass es sich bei den Ermittlungseinheiten um zwei oder mehr separate Ermittlungseinheiten handelt. Gleiches gilt sinngemäß für die verbleibenden hierin beschriebenen Funktionseinheiten bzw. Funktionseinrichtungen (z.B. die Einleseeinheit(en), die Erfassungseinheit(en) usw.).

Die Ermittlungseinheit kann zusätzlich als Kontroll- bzw. Steuer- und/oder Regel-Einheit konfiguriert sein. Es ist auch möglich, dass eine (zur Ermittlungseinheit separate) Kontroll- bzw. Steuer- und/oder Regel-Einheit vorgesehen ist.

Die Ermittlungseinheit bzw. Kontrolleinheit kann vorzugsweise vorgesehen sein zum Kontrollieren (Steuern bzw. Regeln) zumindest einer Klimatisierungseinrichtung bzw. Maßnahme zur Beeinflussung des Gebäudezonenklimas (bzw. einer oder mehrerer anderer Funktionseinrichtungen), insbesondere so, dass das zumindest eine zu erreichende oder erreichte Gebäudezonenklima und/oder die zumindest eine zu erreichende oder erreichte Gebäudezonenklimaveränderung zeitoptimiert und/oder energieoptimiert erzielt bzw. gehalten wird oder mit der vom Nutzer vorgebbaren Präferenz erzielt bzw. gehalten wird.

Es ist möglich, dass das System insbesondere zumindest eine Maßnahme bzw. Klimatisierungseinrichtung zur Beeinflussung des Gebäudezonenklimas umfasst.

Vorzugsweise können die hierin beschriebenen Funktionseinheiten hardwaremäßig als separate Bauteile bzw. Baugruppen realisiert werden. Alternativ besteht jedoch die Möglichkeit, dass die jeweilige(n) Funktionseinheit(en) als Softwaremodul z.B. in einem Computerprogramm realisiert werden.

Die Erfindung umfasst ferner ein Computerprogramm, insbesondere für ein Gebäude- bzw. Hausautomationssystem, vorzugsweise zur Klimatisierung zumindest einer Gebäudezone, und/oder zum Kontrollieren (z.B. Steuern bzw. Regeln) oder Überwachen zumindest einer Maßnahme zum Beeinflussen des Gebäudezonenklimas oder zumindest einer Funktionseinrichtung des Gebäudeautomationssystems und/oder zum Abrufen von vorzugsweise mittels Sensoren erfasster Größen bzw. Werte, die das Gebäudezonenklima (Innenklima) bzw. das Außenklima beschreiben.

Das Computerprogramm ist konfiguriert bzw. ausgebildet, dass wenn es von einer Datenverarbeitungseinheit (z.B. Computer, Prozessor, Mikrocontroller, etc.) oder einem Steuer- bzw. Regelsystem ausgeführt wird, veranlasst, die Schritte des wie hierin beschriebenen Betriebsverfahrens auszuführen.

Ferner umfasst die Erfindung auch einen Computer, eine Datenverarbeitungseinheit (umfassend einen Prozessor oder Mikrocontroller), ein Steuer- bzw. Regelsystem oder ein computerlesbares Medium, das ein Computerprogramm wie hierin beschrieben umfasst.

Weitere Merkmale des Systems und des Computerprogramms ergeben sich unmittelbar aus dem hierin beschriebenen Verfahren oder System.

Obige Merkmale sind beliebig miteinander kombinierbar. Andere vorteilhafte Weiterbildungen der Erfindung sind in den Unteransprüchen offenbart oder ergeben sich aus der nachstehenden Beschreibung bevorzugter Ausführungsbeispiele in Verbindung mit den beigefügten Figuren. Es zeigen:
Figur 1 ein Ausführungsbeispiel eines erfindungsgemäßen Betriebsverfahrens für ein Gebäude- bzw. Hausautomationssystem in Form eines Flussdiagramms,
Figur 2 eine schematische Darstellung zur Veranschaulichung eines Ausführungsbeispiels des erfindungsgemäßen Betriebsverfahrens und des erfindungsgemäßen Gebäudeautomationssystems,
Figur 3 ein Koordinatensystem mit einem Ist-Wert und einem Soll-Wert und einem Maßnahmenvektor, um von dem Ist-Wert zu dem Soll-Wert zu gelangen, zur beispielhaften Veranschaulichung des Prinzips der Erfindung,
Figur 4 ein Koordinatensystem mit einem Ist-Wert, einem Soll-Wert und verschiedenen Maßnahmenvektoren, um unter gegebenen Randbedingungen von dem Ist-Wert zu dem Soll-Wert zu gelangen, zur beispielhaften Veranschaulichung des Prinzips der Erfindung,
Figur 5 ein Koordinatensystem mit einem Ist-Wert, einem Soll-Wert und verschiedenen Maßnahmenvektoren, um unter gegebenen Randbedingungen von dem Ist-Wert zu dem Soll-Wert zu gelangen, zur beispielhaften Veranschaulichung des Prinzips der erfindungsgemäßen endlichen iterativen Ermittlung,
Figur 6 ein Koordinatensystem mit einem Ist-Wert, einem Soll-Wert und verschiedenen Maßnahmenvektoren, um unter gegebenen Randbedingungen von dem Ist-Wert zu dem Soll-Wert zu gelangen, zur beispielhaften Veranschaulichung des Prinzips der Erfindung, und
Figur 7 eine schematische Darstellung zur beispielhaften Veranschaulichung des erfindungsgemäßen Prinzips der vom Nutzer vorgebbaren Präferenz.

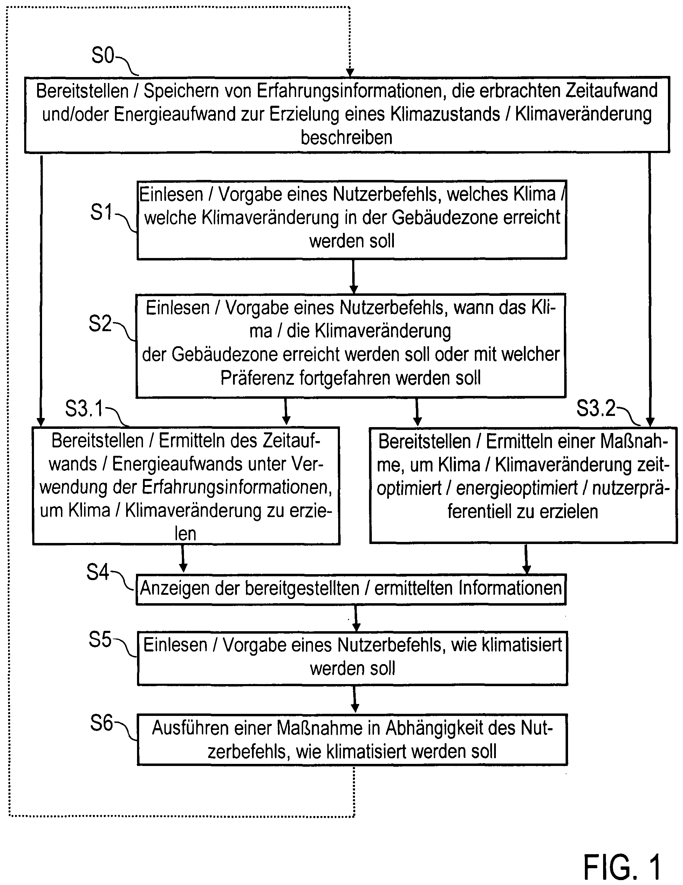

Figur 1 zeigt ein Ausführungsbeispiel eines erfindungsgemäßen Betriebsverfahrens für ein Gebäude- bzw. Hausautomationssystem in Form eines Flussdiagramms.

In einem Schritt S1 wird ein Nutzerbefehl eingelesen. Der Nutzerbefehl im Schritt S1 gibt an, welches Gebäudezonenklima oder welche Gebäudezonenklimaveränderung in der Gebäudezone erreicht und vorzugsweise gehalten werden soll. Der Nutzer kann z.B. eine gewünschte Lufttemperatur (z.B. 20°C) vorgeben oder z.B. eine gewünschte Temperaturänderung (z.B. Erhöhung um 3°C). Nachfolgend wird der Kürze wegen nur das "Gebäudezonenklima" genannt, wobei jedoch alternativ oder ergänzend auch die "Gebäudezonenklimaveränderung" umfasst ist.

Es ist möglich, dass der Nutzer mehrere Vorgaben trifft, z.B. eine gewünschte Temperatur und eine gewünschte Luftfeuchtigkeit. Ferner kann der Nutzer z.B. ein vorzugsweise vordefiniertes Gebäudezonenklima-Sollszenario wählen, das mehrere Nutzervorgaben umfasst, z.B. eine gewünschte Temperatur und eine gewünschte Luftfeuchtigkeit.

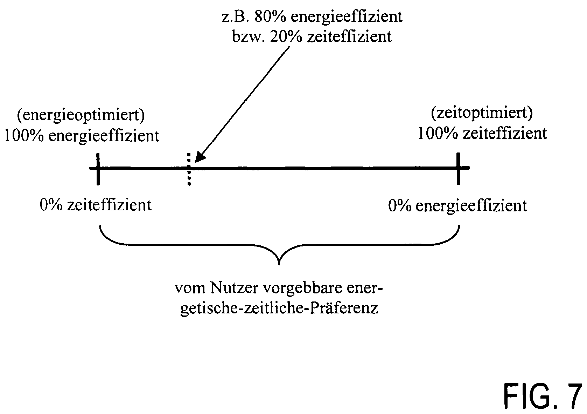

In einem Schritt S2 wird ein weiterer Nutzerbefehl eingelesen. Der Nutzerbefehl gibt an, zu welchem Zeitpunkt (bzw. in welchem Zeitraum) das im Schritt S1 vorgegebene Gebäudezonenklima erreicht werden soll. Der Nutzerbefehl kann alternativ oder ergänzend auch vorgeben, dass das vorgegebene Gebäudezonenklima zeitoptimiert bzw. so schnell wie möglich erreicht werden soll, energieoptimiert bzw. mit dem geringst möglichen Energieaufwand erreicht werden soll oder mit welcher vom Nutzer gewünschten energetisch-zeitlichen Präferenz das vorgegebene Gebäudezonenklima erreicht werden soll. Das Prinzip der vom Nutzer vorgebbaren Präferenz ist in Figur 7 veranschaulicht. Wie in Figur 7 gezeigt, kann sich die vom Nutzer vorgebbare Präferenz zwischen einschließlich der energieoptimierten (100% energieeffizient) und der einschließlich zeitoptimierten (100% zeiteffizient) Gewichtung erstrecken und z.B. im Ergebnis dazu führen, dass das zu erreichende Gebäudezonenklima mit einer Gewichtung von z.B. "80% energieeffizient" und "20% zeiteffizient" erzielt wird.

In einem Schritt S3.1 kann der erforderliche Mindestzeitaufwand und der erforderliche Mindestenergieaufwand, um das gewünschte Gebäudezonenklima zu erreichen, ermittelt werden. Das Ermitteln erfolgt unter Verwendung zuvor im Schritt S0 ermittelter und gesammelter Erfahrungsinformationen, die beschreiben, wie sich das Gebäudezonenklima unter gegebenen Randbedingungen (z.B. Außenlufttemperatur, Sonneneinstrahlung, Strahlungsleistung, Innenlufttemperatur oder andere Außenklimagrößen und Gebäudezonenklimagrößen) und unter der Einwirkung zumindest einer Maßnahme zur Beeinflussung des Gebäudezonenklimas (z.B. Heizen, Lüften, Verschatten, usw.) erfahrungsgemäß verhält. Die Erfahrungsinformationen beschreiben unter Berücksichtigung zumindest einer Maßnahme zur Beeinflussung des Gebäudezonenklimas einen tatsächlich erbrachten Zeitaufwand und Energieaufwand, um ausgehend von einem Gebäudezonen-Ist-Klima ein bestimmtes Gebäudezonen-Soll-Klima zu erzielen.

Obwohl in Figur 1 nicht dargestellt, werden Größen erfasst, eingelesen oder auf andere Art und Weise bereitgestellt, die in die Ermittlung einfließen. Die Größen können z.B. umfassen die Lufttemperatur, Helligkeit, Luftfeuchtigkeit, Windstärke, Bewölkung, den Energieverbrauch zumindest einer Maßnahme zur Beeinflussung des Gebäudezonenklimas, Wetterdaten, gegebenenfalls Wettervorhersagedaten, allgemeingültige (z.B. Datum, Jahreszeit, etc.) und nutzerspezifischen Kalenderdaten (z.B. Anwesenheit, Abwesenheit, Termine, etc.) sowie Daten, die den Zustand oder das Verhalten zumindest einer Maßnahme (bzw. deren Aktuatoren) zur Beeinflussung des Gebäudezonenklimas beschreiben.

Alternativ oder ergänzend zu Schritt S3.1 kann in einem Schritt S3.2 zumindest eine Maßnahme ermittelt werden, die geeignet ist, die in Schritt S2 eingelesenen Nutzer-Vorgaben zu erzielen. Das Ermitteln erfolgt im Wesentlichen identisch wie in Schritt S3.1, so dass um Wiederholungen zu vermeiden, auf obige Beschreibung verwiesen wird.

In Schritt S4 werden dem Nutzer die in Schritt S3.1 bzw. S3.2 ermittelten Informationen angezeigt, woraufhin der Nutzer in Schritt S5 wählen kann, wie klimatisiert werden soll, insbesondere mit welcher Maßnahme, ob energieoptimiert, zeitoptimiert oder mit welcher Präferenz hinsichtlich Energie-Zeit-Gewichtung, sofern nicht bereits in Schritt S2 geschehen.

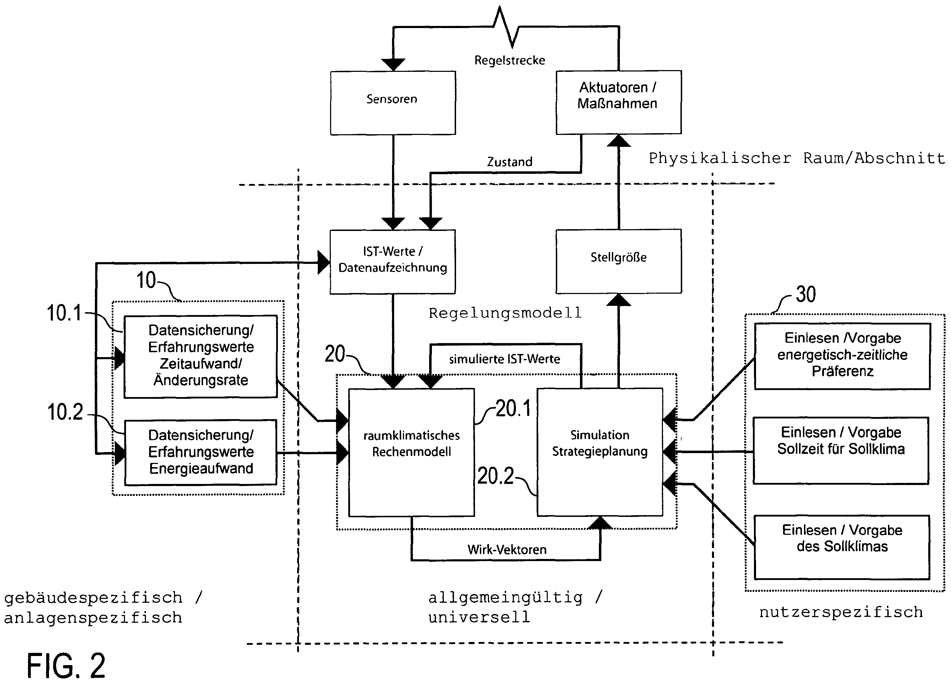

In einem Schritt S6 wird dann zumindest eine Maßnahme zur Beeinflussung des Gebäudezonenklimas ausgeführt, die geeignet ist, die Nutzer-Vorgaben zu erfüllen. Das Ausführen der zumindest einen Maßnahme zur Beeinflussung des Gebäudezonenklimas erfolgt vorzugsweise mittels Steuerns bzw. Regelns (z.B. mittels der Ermittlungseinheit 20 oder einer in Figur 2 nicht dargestellten Kontrolleinheit) der den Maßnahmen zugeordneten Aktuatoren in Abhängigkeit ermittelter Stellgrößen. Auf diese Weise kann das vom Nutzer vorgegebene zu erreichende Gebäudezonenklima erzielt und solange wie vom Nutzer gewünscht gehalten werden.

Ein in dem Flussdiagramm der Figur 1 nicht dargestelltes Merkmal ist, dass das Betriebsverfahren einen spätmöglichsten Zeitpunkt ermitteln kann, zu dem zumindest eine Maßnahme zur Beeinflussung des Gebäudezonenklimas zu aktivieren ist, um das vom Nutzer vorgegebene zu erreichende Gebäudezonenklima zu der vom Nutzer vorgegeben Zeit zu erzielen, wodurch eine überflüssige klimatische Konditionierung der Gebäudezone vermeidbar ist und somit Energie eingespart werden kann.

Ein weiteres in Figur 1 nicht explizit dargestelltes Merkmal ist das autonome Ausführen und/oder Anpassen zumindest einer Maßnahme zur Beeinflussung des Gebäudezonenklimas basierend oder reagierend auf aktuell erfassten, sich ändernden oder zumindest aktuell veränderten Randbedingungen, was durch die Ermittlungseinheit 20 oder eine separate Kontrolleinheit kontrollierbar ist, wodurch auch bei sich ändernden Randbedingungen (z.B. ein Temperatursturz) das zu erreichende Gebäudezonenklima erzielt bzw. gehalten werden kann.

Figur 2 zeigt eine schematische Darstellung zur Veranschaulichung eines Ausführungsbeispiels des erfindungsgemäßen Betriebsverfahrens und des erfindungsgemäßen Gebäudeautomationssystems. Das Ausführungsbeispiel der Figur 2 stimmt teilweise mit dem vorstehend beschriebenen Ausführungsbeispiel überein, so dass zur Vermeidung von Wiederholungen auf die vorstehende Beschreibung verwiesen wird.

Die Figur 2 ist in vier Abschnitte unterteilt, nämlich einen allgemeingültigen/universellen, einen gebäudespezifischen/ gebäudeautomationsspezifischen, einen nutzerspezifischen und einen physikalischen. Die Pfeile beschreiben die Datenflüsse zwischen den Funktionseinheiten bzw. Funktionseinrichtungen des Gebäudeautomationssystems.

Der gebäudespezifische/gebäudeautomationsspezifische Abschnitt weist eine Bereitstellungs-/Sammeleinheit 10 auf, die eine Untereinheit 10.1 für gebäudezonenklimabezogene Änderungsraten bzw. für Zeitaufwände zur Erzielung bestimmter Gebäudezonenklimas unter Berücksichtigung und Zuordnung bestimmter Maßnahmen zur Beeinflussung des Gebäudezonenklimas umfasst. Die Bereitstellungs-/Sammeleinheit 10 umfasst ferner eine Untereinheit 10.2 für gebäudezonenklimabezogene Energieaufwände zur Erzielung bestimmter Gebäudezonenklimas unter Berücksichtigung und Zuordnung bestimmter Maßnahmen zur Beeinflussung des Gebäudezonenklimas.

Der allgemeingültige/universelle Abschnitt umfasst eine Ermittlungs-/Recheneinheit 20, die eine Untereinheit 20.1 für ein raumklimatisches Rechen- bzw. Ermittlungsmodell und eine Untereinheit 20.2 zur Simulation und/oder Strategieplanung aufweist.

Der nutzerspezifische Abschnitt umfasst eine Einleseeinheit 30 zum Einlesen von Nutzerbefehlen. Die Nutzerbefehle können eine Vorgabe hinsichtlich eines zu erreichenden Gebäudezonen-Soll-Klimas, einer Soll-Zeit für das zu erreichende Gebäudezonen-Soll-Klima oder hinsichtlich einer energetisch-zeitlichen Präferenz des Nutzers, die energieoptimiert, zeitoptimiert oder dazwischenliegend sein kann, umfassen.

Der physikalische Abschnitt umfasst vorzugsweise Aktuatoren aufweisende Maßnahmen zur Beeinflussung des Gebäudezonenklimas (z.B. eine Heizungseinrichtung, Verschattungseinrichtung, Fenster-Öffnungs-/Schließ-Einrichtung, usw.) und Sensoren zum Erfassen des Gebäudezonenklimas und des Außenklimas.

Die Ermittlungseinheit 20 verwendet zur Ermittlung von der Bereitstellungseinheit 10 kommunizierte Daten/Informationen (Erfahrungsinformationen), von der Einleseeinheit 30 bereitgestellte Nutzerbefehle/Nutzerinformationen und von den Sensoren bereitgestellte vorzugsweise klimabeschreibende Daten/Informationen (z.B. Gebäudezonenlufttemperatur, Außenlufttemperatur, usw.).

Basierend auf den Daten/Information von der Bereitstellungseinheit 10, den Sensoren und der Einleseeinheit 30 kann die Ermittlungseinheit 20 einen erforderlichen Zeitaufwand und Energieaufwand unter Berücksichtigung gegebener oder voraussichtlich gegebener Randbedingungen ermitteln. Alternativ oder ergänzend kann die Ermittlungseinheit 20 zumindest eine Maßnahme zur Beeinflussung des Gebäudezonenklimas ermitteln, die geeignet ist, die Nutzervorgaben zu erfüllen.

Die mittels der Ermittlungseinheit 20 ermittelten Informationen bzw. Daten werden genutzt, um entsprechende Maßnahmen zur Beeinflussung des Gebäudezonenklimas und insbesondere deren Aktuatoren zu steuern bzw. zu regeln, vorzugsweise mittels Kommunizierens von Steuer- bzw. Regeldaten und/oder Stellgrößen.

Das Auswerten der Erfahrungsinformationen ist am effizientesten, wenn eine einzelne Maßnahme oder eine Änderung unter gleichbleibenden Bedingungen beobachtet und erfasst werden kann. Da dies im Fall der Anwesenheit von Nutzern nicht immer möglich ist, kann in einer Phase der Abwesenheit die Kalibrierung verschiedener Maßnahmen unter den gegebenen klimatischen Randbedingungen durchgeführt werden. Dazu kann eine Prozedur vorgesehen werden, die unter Berücksichtigung der bereits eingeflossenen bzw. ermittelten Erfahrungsinformationen entscheidet, ob der derzeitige Ist-Zustand die Sammlung von Erfahrungsinformationen sinnvoll ergänzen kann und daher aufzuzeichnen ist oder nicht.

Das in Figur 2 gezeigte Regelungsmodell kann als ein Mehrgrößenregler ausgeführt werden. Ein Mehrgrößenregler kann mehrere sich gegenseitig beeinflussende Eingangs- und Ausgangsgrößen nach einer bestimmten Systematik regeln. Die Eingangsgrößen sind sensorisch erfasste Werte zur Zustandsbeschreibung des Gebäudezonenklimas und Zustandswerte der Aktuatoren (Feedback). Die Ausgangsgrößen sind konkrete Stellgrößen für die zur Beeinflussung des Gebäudezonenklimas verfügbaren Maßnahmen (bzw. deren Aktuatoren).

Die Regelungs- bzw. Steuervorgänge werden in einem mehrdimensionalen Vektorraum berechnet, in dem jede regelbare gebäudezonenklimatische Größe eine Dimension darstellt. Die nachfolgende Beschreibung beschränkt sich zum Zweck des besseren Verständnisses auf zwei Dimensionen, die beispielhaft mit den gebäudezonenklimatischen Größen Lufttemperatur und Luftfeuchte belegt werden, wobei jedoch auch mehr oder weniger als zwei Dimensionen möglich sind.

Der Prozess der Regelung bzw. Steuerung kann ebenfalls mit Hilfe von Vektoren beschrieben werden. Ausgehend von einem bestimmten Punkt im Raum (Ist-Klima) soll auf einem zu ermittelnden Weg ein Ziel erreicht werden (Soll-Klima).

Die Sollwerte (insbesondere das zu erreichende Gebäudezonen-Soll-Klima) werden nachfolgend zum Zweck des besseren Verständnisses als eindimensionale raumklimatische Größen (z.B. Lufttemperatur = 20°C) vorgegeben, können aber auch mehrdimensional vorgegeben werden, um einen Sollwertebereich zu definieren.

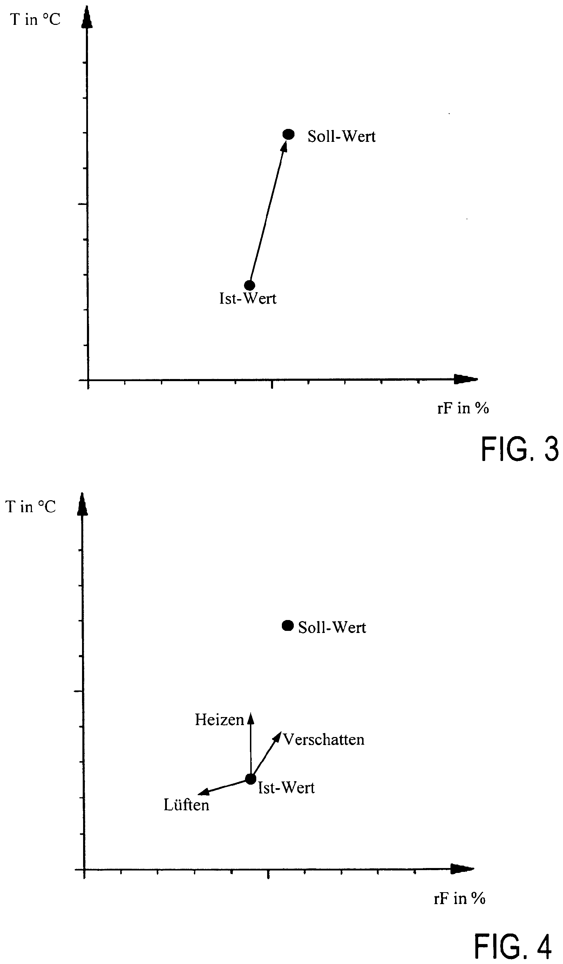

Die Figuren 3 bis 6 zeigen Koordinatensysteme, deren vertikale Achsen die Gebäudezonenklimalufttemperatur T in C° und deren horizontale Achsen die relative Luftfeuchtigkeit rF in % angeben.

In Figur 3 wird ein gebäudezonenklimatischer Ist-Wert als Punkt im Raum markiert, dessen Position durch die von den Sensoren erfassten Messgrößen definiert ist. Der Ist-Wert wird durch äußere und innere Randbedingungen (z.B. Wetter, Nutzereingriffe, thermische Trägheit des Gebäudes bzw. der Gebäudezone) beeinflusst. Diese Einflüsse wirken als Vektorgrößen, die eine Verschiebung des Ist-Wertes vom Zielbereich weg oder zum Zielbereich hin bewirken.

Wie in Figur 4 gezeigt, stehen, um den Ist-Wert an den gewünschten Soll-Wert anzupassen, verschiedene Maßnahmen zur Beeinflussung des Gebäudezonenklimas zur Verfügung, die einen Einfluss auf eine oder mehrere gebäudezonenklimatische Größen haben können. Die zur Beeinflussung der Größen zur Verfügung stehenden Maßnahmen (Heizen, Lüften, etc.) können je nachdem unter welchen Randbedingungen sie wirken, sehr unterschiedliche Auswirkungen auf das Gebäudezonenklima haben. Die natürliche Lüftung (etwa über Fenster) gleicht z.B. die Lufttemperatur in der Gebäudezone der Außenlufttemperatur an. Ist die Außenlufttemperatur geringer als die die Lufttemperatur der Gebäudezone, führt das Lüften zu einer Abkühlung, ist sie höher, zu einer Erwärmung der Gebäudezone. Diese Wirkzusammenhänge sind im Wesentlichen allgemeingültig und können daher in einem numerischen Regelungsmodell hinterlegt werden. Im Regelungsmodell kann anhand der numerischen Modellierung der Wirkzusammenhänge die Wirkrichtung eines Maßnahmen-Vektors unter den gegebenen Randbedingungen bestimmt werden.

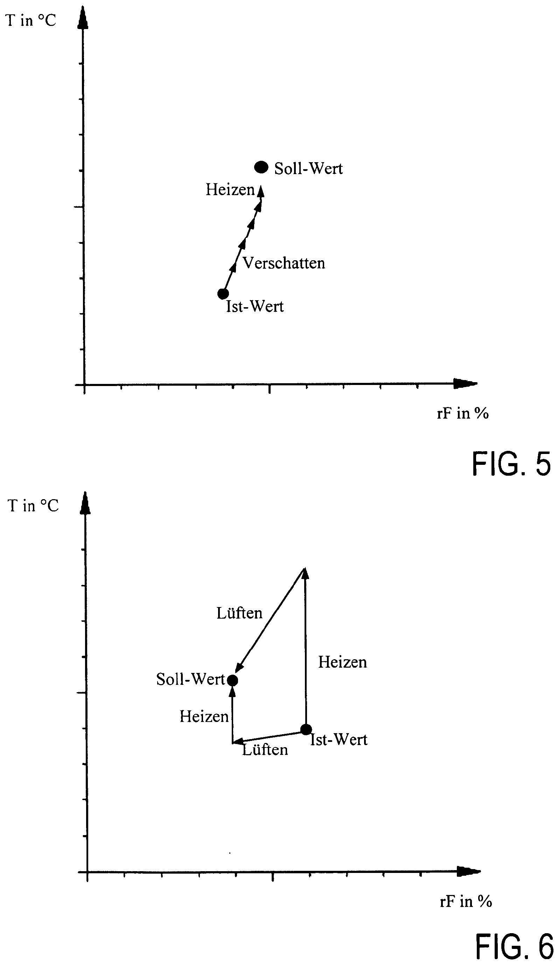

Wie in Figur 5 gezeigt, lassen sich für die Verschiebung des Ist-Werts in Richtung des Soll-Werts verschiedene Lösungen finden, je nachdem welche Maßnahmen mit welcher Intensität, mit welcher Dauer und in welcher Reihenfolge bzw. Kombination zum Einsatz kommen.

Die verschiedenen Lösungswege unterscheiden sich insbesondere dadurch, wie viel Zeit benötigt wird, um das Ziel zu erreichen bzw. zu halten und wie viel Energie dafür insgesamt aufgewendet werden muss. Diese Unterscheidung ist bisher jedoch praktisch nicht möglich gewesen, da ohne eine aufwändige vorausgehende Computersimulation des bauphysikalischen Gebäudeverhaltens keine Aussage darüber getroffen werden kann, wie viel Zeit bzw. Energie eine einzelne Maßnahme benötigt, um einen gewünschten Effekt zu erzielen. Ohne die Bestimmung der nötigen Wirkzeiten kann auch keine Energieverbrauchsrechnung ausgeführt werden.

Wie jedoch bereits oben beschrieben, ist es mittels der Erfindung möglich, zu ermitteln und vorherzusagen, wie viel Zeit bzw. Energie eine oder mehrere Maßnahmen zur Beeinflussung des Gebäudezonenklimas unter gegebenen Randbedingungen und/oder unter zumindest einer Einwirkung zumindest einer Maßnahme zur Beeinflussung des Gebäudezonenklimas benötigen, um ausgehend von einem Gebäudezonen-Ist-Klima ein zu erreichendes Gebäudezonen-Soll-Klima zu erzielen bzw. zu halten. Das kann insbesondere erreicht werden, indem die Anpassungsrate (die Änderung, die eine Maßnahme auf eine raumklimatische Größe in einer gewissen Zeit erwirken kann) ermittelt wird. Die Änderungsrate ist gebäudezonenspezifisch und/oder gebäudeautomationsspezifisch (z.B. thermische Trägheit, max. Luftwechselrate bei natürlicher Lüftung, maximale zu erreichende Helligkeit bei 0% Verschattung, maximales Leistungsvermögen der Maßnahmen zur Beeinflussung des Gebäudezonenklimas, etc.) und kann von der erfindungsgemäßen Regelungssystematik vorzugsweise im Betrieb empirisch ermittelt werden. Dazu werden die Auswirkung(en) einer Maßnahme auf die Änderung einer gebäudezonenklimatischen Größe (z.B. Kelvin pro Minute) im Betrieb sensorisch erfasst, und in Bezug zu den gegebenen äußeren und inneren Randbedingungen (z.B. Außentemperatur, Strahlungsleistung) gesetzt. Diese Daten können durch automatisch beziehbare Informationen (z.B. Datum, Wettervorhersage, etc.) ergänzt werden. Aus den erlangten Datensätzen können gebäudezonenspezifische Eigenschaften oder Kennwerte abgeleitet und als Erfahrungsinformationen in der Bereitstellungseinheit 10 gespeichert werden.

Erfindungsgemäß kann im Laufe des Betriebs bzw. über die Zeit die Beschaffenheit der Gebäudezone, insbesondere das klimatische Verhalten, fortlaufend "erlernt" und vorzugsweise fortlaufend verfeinert werden, vorteilhaft ohne dass gebäudespezifische Daten (z.B. Raumvolumen, Massen etc.) aufwendig erlangt und hinterlegt werden müssen.

Ist die Änderungsrate einer Maßnahme unter den gegebenen Rahmenbedingungen bekannt, kann die Dauer des Regelungsprozesses approximiert werden. Gleichzeitig sind Informationen über den Energieverbrauch jeder Maßnahme hinterlegt, die sensorisch erfasst oder manuell eingebbar sind. Damit kann mittels der Erfindung eine Aussage darüber getroffen werden, welche Maßnahme (Aktuatorik) welchen Einfluss auf welche raumklimatische Größe hat, mit welcher Geschwindigkeit sich diese ändert und mit welchem Energieaufwand diese Änderung verbunden ist.

Die Maßnahmen können somit nach Zeit- und Energieeffizienz-Kriterien bewertet und ausgewählt werden. Ihre Wirksamkeit hinsichtlich des Erreichens des Soll-Klimas lässt sich über die Länge des Maßnahmen-Vektors im Regelungsmodell darstellen. Dabei kann die Vektorlänge stark variieren, je nachdem ob die Zeiteffizienz (Geschwindigkeit) oder die Energieeffizienz der durch die Maßnahme erreichten Änderung als Kriterium herangezogen wird. Länge und Richtung des Vektors geben demnach Auskunft darüber, welche Wirksamkeit die Maßnahme in Bezug auf das Erreichen des Soll-Klimas hat.

Damit können verschiedene Strategien bzw. Lösungsmöglichkeiten zur Erzielung der Nutzervorgabe(n) simuliert werden, in welcher Reihenfolge bzw. Kombination, Dauer und Intensität die Maßnahmen veranlasst werden sollten, um unter der vorgebbaren Gewichtung von Energie und Zeit (energieoptimiert, zeitoptimiert oder dazwischenliegend) einen optimalen Lösungsweg zu finden.

Wie in Figur 5 gezeigt, erfolgt die Ermittlung vorzugsweise durch ein endliches Iterations- und Bewertungsverfahren, das in einer Simulationsfunktion parallel zum Regelungsbetrieb ausgeführt wird. Da jede Maßnahme, die für eine bestimmte Zeit aktiv ist, zu einer neuen gebäudezonenklimatischen Situation führt und damit auch spätere Maßnahmen andere Einflüsse auf das Gebäudezonenklima haben können, kann in einem Iterationsverfahren ein simulierter Ist-Wert (siehe auch Figur 2), der dem mit dem vorausgegangenen Iterationsschritt erreichten Ziel-Wert entspricht, an die Simulationsfunktion übergeben werden. Von diesem Punkt aus wird der potentielle Wirk-Vektor der Maßnahmen im nächsten Iterationsschritt berechnet. Ziel des Iterationsverfahrens ist, den hinsichtlich der vorgebbaren zeitlich-energetischen-Präferenz optimalen Pfad bzw. zumindest eine geeignete Maßnahme zum Erzielen eines Soll-Werts zu finden. Ist die Simulationsfunktion zu einer optimalen Lösungsstrategie gelangt, wird das erste Stellgrößenpaket übermittelt. Nachfolgend wird die Lösungsstrategie auf Basis der neuen Ist-Werte überprüft und ggf. korrigiert.

Anhand Figur 6 wird nun weiter beispielhaft erläutert, wie die erfindungsgemäße Regelungssystematik bzw. Ermittlung funktioniert.

Beispiel 1: Um den gewünschten Soll-Wert (Soll-Klima) zu erreichen, müssen mehrere Maßnahmen durchgeführt werden (Lüften und Heizen). Der Soll-Wert soll möglichst energieeffizient erreicht werden (siehe Figur 7). Die Außentemperatur liegt unter der Gebäudezonentemperatur.

Als Lösungen kommen prinzipiell drei Handlungsstrategien in Frage, erst Lüften dann Heizen, erst Heizen dann Lüften oder beides gleichzeitig.

Die Ermittlungseinheit 20 wird die erste Strategie ermitteln (erst Lüften, dann Heizen), da hierbei die resultierende Länge der Summe der einzelnen Vektorenlängen am kürzesten und somit am effizientesten ist.

Würde zuerst geheizt werden, wäre die Heizdauer länger, da der größere Energieverlust durch das Lüften bei hoher Temperatur kompensiert werden müsste.

Würden beide Maßnahmen zeitgleich ausgeführt werden, wäre der Wirk-Vektor der Heizung wesentlich kürzer, es müsste also wesentlich länger und intensiver geheizt werden, um den Soll-Wert zu erreichen.

Beispiel 2: Der Nutzer hat sich für einen energieeffizienten Betriebsmodus (z.B. energieoptimiert oder 100% energieeffizient wie in Figur 7 beschrieben) entschieden. Obwohl die Heizung in Betrieb ist, öffnet der Nutzer ein Fenster. Um den Soll-Wert (Soll-Klima) zu halten, müsste die Heizleistung erhöht werden. Die erfindungsgemäße Regelungssystematik würde in diesem Beispiel die Heizung abschalten, da nicht absehbar ist, dass in der Zukunft der Soll-Wert energieeffizient erreicht werden kann. Dennoch würde sich der Nutzer durch das Abschalten der Heizung nicht überstimmt vorkommen, da er selbst zuvor die Präferenz "energieoptimiert" (oder zumindest stark auf Energieeffizienz gesetzt hat).

Wird die Gewichtung der Energieeffizienz minimiert (z.B. 50% energieeffizient und 50% zeiteffizient wie in Figur 7 beschrieben), kann das dazu führen, dass die Heizung weiterhin aktiviert bleibt. Der Nutzer nimmt durch die Festlegung seiner Präferenz hinsichtlich Zeiteffizienz und/oder Energieeffizienz den mit dem Lüften einhergehenden Energieverlust in Kauf.

## Patentansprüche

1. Betriebsverfahren für ein Gebäudeautomationssystem, wobei das Betriebsverfahren die folgenden Schritte umfasst:
- Bereitstellen und/oder Sammeln (S0) zumindest einer Information, die zumindest einen erbrachten Zeitaufwand und Energieaufwand zur Erzielung zumindest eines bestimmten Gebäudezonenklimas und/oder zumindest einer bestimmten Gebäudezonenklimaveränderung beschreibt,
- unter Verwendung der zumindest einen Information Ermitteln (S3.1) zumindest eines erforderlichen Zeitaufwands und Energieaufwands zur Erzielung zumindest eines zu erreichenden Gebäudezonenklimas und/oder zumindest einer zu erreichenden Gebäudezonenklimaveränderung, wobei der erforderliche Zeitaufwand ein Mindestzeitaufwand ist und der erforderliche Energieaufwand ein Mindestenergieaufwand ist, und
- unter Verwendung der zumindest einen Information Ermitteln (S3.2) zumindest einer Maßnahme zur Beeinflussung des Gebäudezonenklimas, mit der zumindest ein zu erreichendes Gebäudezonenklima und/oder zumindest eine zu erreichende Gebäudezonenklimaveränderung zeitoptimiert und/oder energieoptimiert erzielbar ist oder mit einer vom Nutzer vorgebbaren Präferenz erzielbar ist.

2. Betriebsverfahren nach Anspruch 1, umfassend zumindest einen der folgenden Schritte:
- Einlesen (S5) einer Nutzerbefehlsinformation, zu welcher Zeit das zu erreichende Gebäudezonenklima und/oder die zu erreichende Gebäudezonenklimaveränderung zu erreichen ist,
- Einlesen (S5) einer Nutzerbefehlsinformation dahingehend, ob das zu erreichende oder erreichte Gebäudezonenklima und/oder die zu erreichende oder erreichte Gebäudezonenklimaveränderung mit dem Mindestzeitaufwand oder mit dem Mindestenergieaufwand zu erzielen oder zu halten ist oder mit welcher Präferenz zwischen Mindestzeitaufwand und Mindestenergieaufwand das zu erreichende oder erreichte Gebäudezonenklima und/oder die zu erreichende oder erreichte Gebäudezonenklimaveränderung zu erzielen oder zu halten ist.

3. Betriebsverfahren nach einem der vorhergehenden Ansprüche, wobei das Bereitstellen und/oder Ermitteln
- zumindest zeitweise während des Betriebs des Gebäudeautomationssystems erfolgt, und/oder
- erfolgt, wenn eine einzige Maßnahme zur Beeinflussung des Gebäudezonenklimas ausgeführt wird, und/oder
- vor oder während Ausführens zumindest einer Maßnahme zur Beeinflussung des Gebäudezonenklimas erfolgt.

4. Betriebsverfahren nach einem der vorhergehenden Ansprüche, umfassend zumindest einen der folgenden Schritte:
- Erfassen und/oder Einlesen zumindest einer Größe, die den Zustand oder das Verhalten zumindest einer Maßnahme zur Beeinflussung des Gebäudezonenklimas beschreibt,
- Erfassen und/oder Einlesen zumindest einer Größe, die den Energieverbrauch, die Klimatisierungseffizienz und/oder das Leistungsverhalten zumindest einer Maßnahme zur Beeinflussung des Gebäudezonenklimas beschreibt.

5. Betriebsverfahren nach einem der vorhergehenden Ansprüche, wobei das Bereitstellen (S0 und/oder Ermitteln (S3.1, S3.2) unter Berücksichtigung zumindest einer Einwirkung zumindest einer Maßnahme zur Beeinflussung des Gebäudezonenklimas erfolgt.

6. Betriebsverfahren nach einem der vorhergehenden Ansprüche, wobei das Erfassen und/oder Einlesen
- zumindest zeitweise während des Betriebs des Gebäudeautomationssystems erfolgt, und/oder
- erfolgt, wenn eine einzige Maßnahme zur Beeinflussung des Gebäudezonenklimas ausgeführt wird, und/oder
- vor oder während Ausführens zumindest einer Maßnahme zur Beeinflussung des Gebäudezonenklimas.

7. Betriebsverfahren nach einem der vorhergehenden Ansprüche, umfassend den folgenden Schritt:
- Ausführen und/oder Anpassen (S6) zumindest einer Maßnahme zur Beeinflussung des Gebäudezonenklimas, um das zumindest eine zu erreichende oder erreichte Gebäudezonenklima und/oder die zumindest eine zu erreichende oder erreichte Gebäudezonenklimaveränderung zeitoptimiert und/oder energieoptimiert zu erzielen oder zu halten oder mit einer vom Nutzer vorgebbaren Präferenz zu erzielen oder zu halten.

8. Betriebsverfahren nach einem der vorhergehenden Ansprüche, umfassend den folgenden Schritt:
- Ermitteln eines erforderlichen Zeitaufwands und/oder Energieaufwands, um zumindest ein zu erreichendes Gebäudezonenklima und/oder zumindest eine zu erreichende Gebäudezonenklimaveränderung zu zumindest einer vom Nutzer vorgebbaren Zeit zu erzielen.

9. Betriebsverfahren nach einem der vorhergehenden Ansprüche, umfassend den folgenden Schritt:
- Ermitteln eines spätmöglichsten Zeitpunkts, um zumindest eine Maßnahme zur Beeinflussung des Gebäudezonenklimas zu aktivieren, so dass zumindest ein zu erreichendes Gebäudezonenklima und/oder zumindest eine zu erreichende Gebäudezonenklimaveränderung zu einer vom Nutzer vorgebbaren Zeit erreicht wird, wodurch eine überflüssige klimatische Konditionierung der Gebäudezone vermeidbar ist.

10. Betriebsverfahren nach Anspruch 9, umfassend den folgenden Schritt:
- Automatisches Aktivieren der zumindest einen Maßnahme zur Beeinflussung des Gebäudezonenklimas zum spätmöglichsten Zeitpunkt.

11. Betriebsverfahren nach einem der vorhergehenden Ansprüche, umfassend den folgenden Schritt:
- Ermitteln, wie viel Zeit verbleibt und/oder wie viel Energie noch erforderlich ist, bis ein zu erreichendes Gebäudezonenklima und/oder eine zu erreichende Gebäudezonenklimaveränderung erzielt wird.

12. Betriebsverfahren nach einem der vorhergehenden Ansprüche, umfassend den Schritt des Ausführens und/oder Anpassens zumindest einer Maßnahme zur Beeinflussung des Gebäudezonenklimas basierend oder reagierend auf zumindest einem von Folgenden:
- zumindest einer im Wesentlichen aktuell erfassten Randbedingung,
- zumindest einer sich ändernden oder zumindest im Wesentlichen aktuell veränderten Randbedingung,
- zumindest einer Einwirkung zumindest einer Maßnahme zur Beeinflussung des Gebäudezonenklimas.

13. Betriebsverfahren nach einem der vorhergehenden Ansprüche, umfassend den folgenden Schritt:
- Kontrollieren und/oder Überwachen zumindest zweier Funktionseinrichtungen des Gebäudeautomationssystems und/oder zumindest zweier Maßnahmen zur Beeinflussung des Gebäudezonenklimas mittels des gleichen Kontroll- und/oder Überwachungskreises.

14. Gebäudeautomationssystem oder Steuersystem, umfassend
- eine Bereitstellungs- und/oder Sammeleinheit (10), die konfiguriert ist, um zumindest eine Information bereitzustellen und/oder zu sammeln, die zumindest einen erbrachten Zeitaufwand und Energieaufwand zur Erzielung zumindest eines bestimmten Gebäudezonenklimas und/oder zumindest einer bestimmten Gebäudezonenklimaveränderung beschreibt,
- eine Ermittlungseinheit (20), die konfiguriert ist, um zumindest einen erforderlichen Zeitaufwand und Energieaufwand zur Erzielung zumindest eines zu erreichenden Gebäudezonenklimas und/oder zumindest einer zu erreichenden Gebäudezonenklimaveränderung unter Verwendung der zumindest einen Information zu ermitteln, wobei der erforderliche Zeitaufwand ein Mindestzeitaufwand ist und der erforderliche Energieaufwand ein Mindestenergieaufwand ist, und
- eine Ermittlungseinheit (20), die konfiguriert ist, um zumindest eine Maßnahme zur Beeinflussung des Gebäudezonenklimas, mit der zumindest ein zu erreichendes Gebäudezonenklima und/oder zumindest eine zu erreichende Gebäudezonenklimaveränderung zeitoptimiert und/oder energieoptimiert erzielbar ist oder mit einer vom Nutzer vorgebbaren Präferenz erzielbar ist, unter Verwendung der zumindest einen Information zu ermitteln.

15. System nach Anspruch 14, umfassend zumindest eines von Folgenden:
- eine Einleseeinheit (30) zum Einlesen einer Nutzerbefehlsinformation, zu welcher Zeit das zu erreichende Gebäudezonenklima und/oder die zu erreichende Gebäudezonenklimaveränderung zu erreichen ist,
- eine Einleseeinheit (30) zum Einlesen einer Nutzerbefehlsinformation dahingehend, ob das zu erreichende oder erreichte Gebäudezonenklima und/oder die zu erreichende oder erreichte Gebäudezonenklimaveränderung mit dem Mindestzeitaufwand oder mit dem Mindestenergieaufwand zu erzielen oder zu halten ist oder mit welcher vom Nutzer vorgebbaren Präferenz zwischen Mindestzeitaufwand und Mindestenergieaufwand das zu erreichende oder erreichte Gebäudezonenklima und/oder die zu erreichende oder erreichte Gebäudezonenklimaveränderung zu erzielen oder zu halten ist.

16. System nach einem der Ansprüche 14 bis 15, wobei die Bereitstellungseinheit (10) und/oder die Ermittlungseinheit (20) konfiguriert ist, um das Bereitstellen und/oder Ermitteln
- zumindest zeitweise während des Betriebs des Gebäudeautomationssystems auszuführen, und/oder
-- auszuführen, wenn eine einzige Maßnahme zur Beeinflussung des Gebäudezonenklimas ausgeführt wird, und/oder
- vor oder während Ausführens zumindest einer Maßnahme zur Beeinflussung des Gebäudezonenklimas auszuführen.

17. System nach einem der Ansprüche 14 bis 16, umfassend eine Erfassungs- und/oder Einleseeinheit, die konfiguriert ist, um zumindest eine Größe, die den Energieverbrauch, die Klimatisierungseffizienz und/oder das Leistungsverhalten zumindest einer Funktionseinrichtung des Gebäudeautomationssystems beschreibt, zu erfassen und/oder einzulesen.

18. System nach einem der Ansprüche 14 bis 17, wobei die Bereitstellungseinheit (10) und/oder die Ermittlungseinheit (20) konfiguriert ist, um das Bereitstellen und/oder Ermitteln unter Berücksichtigung zumindest einer Einwirkung zumindest einer Maßnahme zur Beeinflussung des Gebäudezonenklimas auszuführen.

19. System nach einem der Ansprüche 14 bis 18, wobei die Erfassungseinheit und/oder Einleseeinheit konfiguriert ist, das Erfassen und/oder Einlesen
- zumindest zeitweise während des Betriebs des Gebäudeautomationssystems auszuführen, und/oder
- auszuführen, wenn eine einzige Maßnahme zur Beeinflussung der zumindest einen Gebäudezonenklimagröße ausgeführt wird, und/oder
- vor oder während Ausführens zumindest einer Maßnahme zur Beeinflussung des Gebäudezonenklimas auszuführen.

20. System nach einem der Ansprüche 14 bis 19, umfassend eine Ermittlungseinheit, die konfiguriert ist, einen erforderlichen Zeitaufwand und/oder Energieaufwand zur Erzielung zumindest eines zu erreichenden Gebäudezonenklimas und/oder zumindest einer zu erreichenden Gebäudezonenklimaveränderung zu einer vom Nutzer vorgebbaren Zeit zu ermitteln.

21. System nach einem der Ansprüche 14 bis 20, umfassend eine Ermittlungseinheit (20), die konfiguriert ist zum Ermitteln eines spätmöglichsten Zeitpunkts, um zumindest eine Maßnahme zur Beeinflussung des Gebäudezonenklimas so zu aktivieren, dass zumindest ein zu erreichendes Gebäudezonenklima und/oder zumindest eine zu erreichende Gebäudezonenklimaveränderung erzielt wird, wodurch eine überflüssige klimatische Konditionierung der Gebäudezone vermeidbar ist.

22. System nach Anspruch 21, umfassend eine Aktivierungseinheit, die konfiguriert ist, um zumindest eine Maßnahme zur Beeinflussung des Gebäudezonenklimas zum spätmöglichsten Zeitpunkt automatisch zu aktivieren.

23. System nach einem der Ansprüche 14 bis 22, wobei die Ermittlungseinheit und/oder eine vorgesehene Kontrolleinheit konfiguriert ist, zumindest eine Maßnahme zur Beeinflussung des Gebäudezonenklimas so zu kontrollieren, dass das zumindest eine zu erreichende oder erreichte Gebäudezonenklima und/oder die zumindest eine zu erreichende oder erreichte Gebäudezonenklimaveränderung zeitoptimiert und/oder energieoptimiert erzielt oder gehalten wird oder mit einer vom Nutzer vorgebbaren Präferenz erzielt oder gehalten wird.

24. System nach einem der Ansprüche 14 bis 23, wobei die Ermittlungseinheit und/oder eine vorgesehene Kontrolleinheit konfiguriert ist, um zumindest eine Maßnahme zur Beeinflussung des Gebäudezonenklimas basierend oder reagierend auf zumindest einem von Folgendem zu kontrollieren:
- zumindest einer im Wesentlichen aktuell erfassten Randbedingung,
- zumindest einer sich ändernden oder zumindest im Wesentlichen aktuell veränderten Randbedingung,
- zumindest einer Einwirkung zumindest einer Maßnahme zur Beeinflussung des Gebäudezonenklimas.

25. System nach einem der Ansprüche 14 bis 24, umfassend zumindest eines von Folgenden:
- eine Anzeigeeinrichtung für einen Nutzer zum Anzeigen der ermittelten, errechneten, abgerufenen, erfassten und/oder eingelesenen Informationen,
- eine Erfassungseinrichtung zum sensorischen Erfassen des Gebäudezonenklimas, des Außenklimas und/oder eines Energieverbrauchs, der Klimatisierungseffizienz und/oder des Leistungsverhaltens zumindest einer Maßnahme zur Beeinflussung des Gebäudezonenklimas,
- einen Informationsspeicher zum Speichern und/oder Bereitstellen der bereitgestellten, berechneten, erfassten, erfassten und/oder eingelesenen Informationen.

26. Computerprogramm, welches wenn das Computerprogramm von einer Datenverarbeitungseinheit oder einem Steuersystem ausgeführt wird, veranlasst, die Schritte nach Anspruch 1 auszuführen.

27. Computerprogramm nach Anspruch 26, welches wenn es von der Datenverarbeitungseinheit oder dem Steuersystem ausgeführt wird, veranlasst, die Schritte nach einem der Ansprüche 2 bis 13 auszuführen.

28. Computer, Datenverarbeitungseinheit, Steuersystem oder computerlesbares Medium, umfassend ein Computerprogramm nach einem der Ansprüche 26 bis 27.

## Claims

1. An operating method for a building automation system, wherein the operating method comprises the following steps:
- providing and/or collecting (S0) of at least one information, which describes at least one performed time expenditure and energy expenditure for obtaining at least one specific building zone climate and/or at least one specific building zone climate change,
- using the at least one information, determining (S3.1) at least one required time expenditure and energy expenditure for obtaining at least one building zone climate to be achieved and/or at least one building zone climate change to be achieved, wherein the required time expenditure is a minimum time expenditure and the required energy expenditure is a minimum energy expenditure, and
- using the at least one information, determining (S3.2) at least one measure for influencing the building zone climate with which at least one building zone climate to be achieved and/or at least one building zone climate change to be achieved can be obtained in a time-optimized and/or energy-optimized manner or can be obtained with a user-prescribable preference.

2. The operating method according to claim 1, comprising at least one of the following steps:
- reading-in (S5) a user command information as to at which time the building zone climate to be achieved and/or the building zone climate change to be achieved is to be achieved,
- reading-in (S5) a user command information in order to determine whether the building zone climate to be achieved or already achieved and/or the building zone climate change to be achieved or already achieved is to be obtained or maintained with the minimum time expenditure or with the minimum energy expenditure or with which preference between minimum time expenditure and minimum energy expenditure the building zone climate to be achieved or already achieved and/or the building zone climate change to be achieved or already achieved is to be obtained or maintained.

3. The operating method according to any one of the preceding claims, wherein the providing and/or determining takes place
- at least temporarily during operation of the building automation system, and/or
- when a single measure for influencing the building zone climate is carried out, and/or
- before or during carrying out of at least one measure for influencing the building zone climate.

4. The operating method according to any one of the preceding claims, comprising at least one of the following steps:
- detecting and/or reading-in at least one parameter, which describes the state or the behaviour of at least one measure for influencing the building zone climate,
- detecting and/or reading-in at least one parameter, which describes the energy consumption, the air-conditioning efficiency and/or the performance behaviour of at least one measure for influencing the building zone climate.

5. The operating method according to any one of the preceding claims, wherein the providing (S0) and/or determining (S3.1, S3.2) taking into account at least one effect of at least one measure for influencing the building zone climate.

6. The operating method according to any one of the preceding claims, wherein the detecting and/or reading-in takes place
- at least temporarily during operation of the building automation system, and/or
- when a single measure for influencing the building zone climate is carried out, and/or
- before or during carrying-out of at least one measure for influencing the building zone climate.

7. The operating method according to any one of the preceding claims, comprising the following step:
- carrying out and/or adapting (S6) at least one measure for influencing the building zone climate in order to obtain or maintain the at least one building zone climate to be achieved or already achieved and/or the at least one building zone climate change to be achieved or already achieved in a time-optimized and/or energy-optimized manner or to obtain or maintain it with a user-prescribable preference.

8. The operating method according to any one of the preceding claims, comprising the following step:
- determining a required time expenditure and/or energy expenditure in order to obtain at least one building zone climate to be achieved and/or at least one building zone climate change to be achieved at at least one user-prescribable time.

9. The operating method according to any one of the preceding claims, comprising the following step:
- determining a latest possible point in time in order to activate at least one measure for influencing the building zone climate, so that at least one building zone climate to be achieved and/or at least one building zone climate change to be achieved is achieved at a user-prescribable time, whereby a superfluous climatic conditioning of the building zone is avoidable.

10. The operating method according to Claim 9, comprising the following step:
- automatic activation of the at least one measure for influencing the building zone climate at the latest possible point in time.

11. The operating method according to any one of the preceding claims, comprising the following step:
- determining how much time is remaining and/or how much energy is still required in order to obtain a building zone climate to be achieved and/or a building zone climate change to be achieved.

12. The operating method according to any one of the preceding claims, comprising the step of carrying out and/or adapting at least one measure for influencing the building zone climate based on or reacting to at least one of the following:
- at least one substantially currently detected marginal condition,
- at least one changing or at least one substantially currently changed marginal condition,
- at least one effect of at least one measure for influencing the building zone climate.

13. The operating method according to any one of the preceding claims, comprising the following step:
- controlling and/or monitoring at least two functional means of the building automation system and/or at least two measures for influencing the building zone climate by means of the same control and/or monitoring circuit.

14. A building automation system or control system, comprising
- a providing and/or collecting unit (10), which is configured to provide and/or collect at least one information, which describes at least one performed time expenditure and energy expenditure for obtaining at least one specific building zone climate and/or at least one specific building zone climate change,
- a determining unit (20), which is configured to determine at least one required time expenditure and energy expenditure for obtaining at least one building zone climate to be achieved and/or at least one building zone climate change to be achieved using the at least one information, wherein the required time expenditure is a minimum time expenditure and the required energy expenditure is a minimum energy expenditure, and
- a determining unit (20), which is configured to determine at least one measure for influencing the building zone climate with which at least one building zone climate to be achieved and/or at least one building zone climate change to be achieved can be obtained in a time-optimized and/or energy-optimized manner or can be obtained with a user-prescribable preference using the at least one information.

15. The system according to claim 14, comprising at least one of the following:
- a read-in unit (30) for reading in a user command information as to at which time the building zone climate to be achieved and/or the building zone climate change to be achieved is to be achieved,
- a read-in unit (30) for reading in a user command information in order to determine whether the building zone climate to be achieved or already achieved and/or the building zone climate change to be achieved or already achieved is to be obtained or maintained with the minimum time expenditure or with the minimum energy expenditure or with which user-prescribable preference between minimum time expenditure and minimum energy expenditure the building zone climate to be achieved or already achieved and/or the building zone climate change to be achieved or already achieved is to be obtained or maintained.

16. The system according to any one of the claims 14 to 15, wherein the providing unit (10) and/or the determining unit (20) is configured in order to execute the providing and/or determining
- at least temporarily during operation of the building automation system, and/or
- when a single measure for influencing the building zone climate is carried out, and/or
- before or during carrying-out of at least one measure for influencing the building zone climate.

17. The system according to any one of the claims 14 to 16, comprising a detecting and/or read-in unit, which is configured for detecting and/or reading in at least one parameter, which describes the energy consumption, the air-conditioning efficiency and/or the performance behaviour of at least one functional means of the building automation system.

18. The system according to any one of the claims 14 to 17, wherein the providing unit (10) and/or the determining unit (20) is configured to execute the providing and/or determining taking into account at least one effect of at least one measure for influencing the building zone climate.

19. The system according to any one of the claims 14 to 18, wherein the detecting unit and/or read-in unit is configured for executing the detecting and/or reading-in
- at least temporarily during operation of the building automation system, and/or
- when a single measure for influencing the at least one building zone climate value is carried out, and/or
- before or during carrying-out of at least one measure for influencing the building zone climate.

20. The system according to any one of the claims 14 to 19, comprising a determining unit, which is configured to determine a required time expenditure and/or energy expenditure for obtaining at least one building zone climate to be achieved and/or at least one building zone climate change to be achieved at a user-prescribable time.

21. The system according to any one of the claims 14 to 20, comprising a determining unit (20), which is configured for determining a latest possible point in time to activate at least one measure for influencing the building zone climate, so that at least one building zone climate to be achieved and/or at least one building zone climate change to be achieved is obtained, whereby a superfluous climatic conditioning of the building zone is avoidable.

22. The system according to claim 21, comprising an activating unit, which is configured for automatically activating at least one measure for influencing the building zone climate at the latest possible point in time.

23. The system according to any one of the claims 14 to 22, wherein the determining unit and/or a provided control unit is configured to control at least one measure for influencing the building zone climate so that the at least one building zone climate to be achieved or already achieved and/or the at least one building zone climate change to be achieved or already achieved is obtained or maintained in a time-optimized and/or energy-optimized manner or is obtained or maintained with a user-prescribable preference.

24. The system according to any one of the claims 14 to 23, wherein the determining unit and/or a provided control unit is configured for controlling at least one measure for influencing the building zone climate based on or reacting to at least one of the following:
- at least one substantially currently detected marginal condition,
- at least one changing or at least substantially currently changed marginal condition,
- at least one effect of at least one measure for influencing the building zone climate.

25. The system according to any one of the claims 14 to 24, comprising at least one of the following:
- a display means for a user for displaying the determined, calculated, retrieved, detected and/or read-in information,
- a detecting means for sensoric detection of the building zone climate, of the outdoor climate and/or of an energy consumption, of the air-conditioning efficiency and/or of the performance behaviour of at least one measure for influencing the building zone climate,
- an information memory for storing and/or providing the provided, calculated, detected and/or read-in information.

26. A computer program, wherein when the computer program is executed by a data processing unit or a control system, causes that the steps according to claim 1 are carried out.

27. The computer program according to claim 26, which when it is executed by the data processing unit or the control system, causes that the steps according to any one of the claims 2 to 13 are carried out.

28. A computer, data processing unit, control system or computer-readable medium, comprising a computer program according to any one of the claims 26 to 27.

## Revendications

1. Procédé de fonctionnement d'un système d'automatisation de bâtiment, le procédé de fonctionnement comprenant les étapes suivantes :
- fournir et/ou collecter (S0) au moins une information qui décrit au moins une dépense de temps et une dépense d'énergie consacrées à l'obtention d'au moins un niveau de climatisation de zone de bâtiment déterminé et/ou au moins une variation de niveau climatisation de zone de bâtiment déterminée,
- déterminer (S3.1), à l'aide de l'au moins une information, au moins une dépense de temps et une dépense d'énergie nécessaire à l'obtention d'un niveau de climatisation de zone de bâtiment à atteindre et/ou d'au moins une variation de niveau de climatisation de zone de bâtiment à atteindre, la dépense de temps nécessaire étant une dépense de temps minimale et la dépense d'énergie nécessaire étant une dépense d'énergie minimale, et
- déterminer (S3.2), à l'aide de l'au moins une information, au moins une mesure permettant d'influer sur le niveau de climatisation de zone de bâtiment et d'obtenir au moins un niveau de climatisation de zone de bâtiment à atteindre et/ou l'au moins une variation de niveau de climatisation de zone de bâtiment à atteindre de manière optimisée en termes de temps et/ou d'énergie ou avec une préférence spécifiable par l'utilisateur.

2. Procédé de fonctionnement selon la revendication 1, comprenant l'une au moins des étapes suivantes :
- lire (S5) une information d'instruction d'utilisateur concernant l'instant auquel le niveau de climatisation de zone de bâtiment à atteindre et/ou la variation de niveau de climatisation de zone de bâtiment à atteindre doivent être atteints,
- lire (S5) une information d'instruction d'utilisateur indiquant si le niveau de climatisation de zone de bâtiment atteint ou à atteindre et/ou la variation de niveau de climatisation de zone de bâtiment atteinte ou à atteindre doivent être atteints ou maintenus avec la dépense de temps minimale ou la dépense d'énergie minimale ou avec quelle préférence entre la dépense de temps minimale et la dépense d'énergie minimale le niveau de climatisation de zone de bâtiment atteint ou à atteindre et/ou la variation de niveau de climatisation de zone de bâtiment atteinte ou à atteindre doivent être atteints ou maintenus.

3. Procédé de fonctionnement selon l'une des revendications précédentes, la fourniture et/ou la détermination étant effectuées
- au moins temporairement pendant le fonctionnement du système d'automatisation de bâtiment, et/ou
- lorsqu'une seule mesure est mise en œuvre pour influer sur le niveau de climatisation de zone de bâtiment, et/ou
- avant ou pendant qu'au moins une mesure est mise en œuvre pour influer sur le niveau de climatisation de zone de bâtiment.

4. Procédé de fonctionnement selon l'une des revendications précédentes, comprenant au moins l'une des étapes suivantes :
- détecter et/ou lire au moins une grandeur qui décrit l'état ou le comportement d'au moins une mesure mise en œuvre pour influer sur le niveau de climatisation de zone de bâtiment,
- détecter et/ou lire au moins une grandeur qui décrit la consommation d'énergie, l'efficacité de la climatisation et/ou la performance d'au moins une mesure mise en œuvre pour influer sur le niveau de climatisation de zone de bâtiment.

5. Procédé de fonctionnement selon l'une des revendications précédentes, la fourniture (S0) et/ou la détermination (S3.1, S3.2) étant effectuées avec prise en compte d'au moins un effet d'au moins une mesure mise en œuvre pour influer sur le niveau de climatisation de zone de bâtiment.

6. Procédé de fonctionnement selon l'une des revendications précédentes, la détection et/ou la lecture étant effectuées
- au moins temporairement pendant le fonctionnement du système d'automatisation de bâtiment, et/ou
- lorsqu'une seule mesure est mise en œuvre pour influer sur le niveau de climatisation de zone de bâtiment, et/ou
- avant ou pendant la mise en œuvre d'au moins une mesure pour influer sur le niveau de climatisation de zone de bâtiment.

7. Procédé de fonctionnement selon l'une des revendications précédentes, comprenant l'étape suivante :
- mettre en œuvre et/ou adapter (S6) au moins une mesure pour influer sur le niveau de climatisation de zone de bâtiment afin d'atteindre ou de maintenir l'au moins un niveau de climatisation de zone de bâtiment atteint ou à atteindre et/ou l'au moins une variation de niveau de climatisation de zone de bâtiment atteinte ou à atteindre de manière optimisée en temps et/ou en énergie ou avec une préférence spécifiable par l'utilisateur.

8. Procédé de fonctionnement selon l'une des revendications précédentes, comprenant l'étape suivante :
- déterminer une dépense de temps et/ou une dépense d'énergie nécessaire pour obtenir au moins un niveau de climatisation de zone de bâtiment à atteindre et/ou au moins une variation de niveau de climatisation de zone de bâtiment à atteindre au moins à un instant spécifiable par l'utilisateur.

9. Procédé de fonctionnement selon l'une des revendications précédentes, comprenant l'étape suivante :
- déterminer l'instant le plus tard possible pour activer au moins une mesure permettant d'influer sur le niveau de climatisation de zone de bâtiment de sorte qu'au moins un niveau de climatisation de zone de bâtiment à atteindre et/ou au moins une variation de niveau de climatisation de zone de bâtiment à atteindre soit atteint à un instant spécifiable par l'utilisateur, ce qui permet d'éviter de climatiser inutilement la zone de bâtiment.

10. Procédé de fonctionnement selon la revendication 9, comprenant l'étape suivante :
- activer automatiquement au moins une mesure permettant d'influer sur le niveau de climatisation de zone de bâtiment à l'instant le plus tard possible.

11. Procédé de fonctionnement selon l'une des revendications précédentes, comprenant l'étape suivante :
- déterminer le temps restant et/ou la quantité d'énergie encore nécessaire jusqu'à ce qu'un niveau de climatisation de zone de bâtiment à atteindre et/ou une variation de niveau de climatisation de zone de bâtiment à atteindre soient atteints.

12. Procédé de fonctionnement selon l'une des revendications précédentes, comprenant l'étape de mise en œuvre et/ou d'adaptation d'au moins une mesure permettant d'influer sur le niveau de climatisation de zone de bâtiment en fonction de, ou en réaction à, l'un au moins des éléments suivants :
- au moins une condition marginale détectée sensiblement actuellement,
- au moins une condition marginale variable ou au moins modifiée sensiblement actuellement,
- au moins un effet d'au moins une mesure permettant d'influer sur le niveau de climatisation de zone de bâtiment.

13. Procédé de fonctionnement selon l'une des revendications précédentes, comprenant l'étape suivante :
- commander et/ou surveiller au moins deux dispositifs fonctionnels du système d'automatisation de bâtiment et/ou au moins deux mesures permettant d'influer sur le niveau de climatisation de zone de bâtiment au moyen du même circuit de commande et/ou de surveillance.

14. Système d'automatisation de bâtiment ou système de commande, comprenant une unité de fourniture et/ou de collecte (10) qui est conçue pour fournir et/ou collecter au moins une information qui décrit au moins une dépense de temps et une dépense d'énergie consacrées pour obtenir au moins un niveau de climatisation de zone de bâtiment déterminé et/ou au moins une variation de niveau de climatisation de zone de bâtiment déterminée,
- une unité de détermination (20) qui est configurée pour déterminer au moins une dépense de temps et une dépense d'énergie nécessaire à l'obtention d'au moins un niveau de climatisation de zone de bâtiment à atteindre et/ou d'au moins une variation de niveau de climatisation de zone de bâtiment à atteindre à l'aide de l'au moins une information, la dépense de temps nécessaire étant une dépense de temps minimale et la dépense d'énergie nécessaire étant une dépense d'énergie minimale, et
- une unité de détermination (20) qui est conçue pour déterminer, à l'aide de l'au moins une information, au moins une mesure permettant d'influer sur le niveau de climatisation de zone de bâtiment et d'obtenir au moins un niveau de climatisation de zone de bâtiment à atteindre et/ou au moins une variation de niveau de climatisation de zone de bâtiment à atteindre de manière optimisée en temps et/ou en énergie ou avec une préférence spécifiable par l'utilisateur.

15. Système selon la revendication 14, comprenant l'un au moins des éléments suivants :
- une unité de lecture (30) permettant de lire une information d'instruction d'utilisateur concernant l'instant auquel le niveau de climatisation de zone de bâtiment à atteindre et/ou la variation de niveau de climatisation de zone de bâtiment à atteindre doivent être atteints,
- une unité de lecture (30) permettant de lire une information d'instruction d'utilisateur indiquant si le niveau de climatisation de zone de bâtiment atteint ou à atteindre et/ou la variation de niveau de climatisation de zone de bâtiment atteinte ou à atteindre doivent être atteints ou maintenus avec la dépense de temps minimale ou la dépense d'énergie minimale ou avec quelle préférence, spécifiable par l'utilisateur, entre la dépense de temps minimale et la dépense d'énergie minimale le niveau de climatisation de zone de bâtiment atteint ou à atteindre et/ou la variation de niveau de climatisation de zone de bâtiment atteinte ou à atteindre doivent être atteints ou maintenus.

16. Système selon l'une des revendications 14 à 15, l'unité de fourniture (10) et/ou l'unité de détermination (20) étant conçues pour effectuer la fourniture et/ou la détermination
- au moins temporairement pendant le fonctionnement du système d'automatisation de bâtiment, et/ou
- lorsqu'une seule mesure est mise en œuvre pour influer sur le niveau de climatisation de zone de bâtiment, et/ou
- avant ou pendant la mise en œuvre d'au moins une mesure pour influer sur le niveau de climatisation de zone du bâtiment.

17. Système selon l'une des revendications 14 à 16, comprenant une unité de détection et/ou de lecture qui est conçue pour détecter et/ou lire au moins une grandeur qui décrit la consommation d'énergie, l'efficacité de la climatisation et/ou les performances d'au moins un dispositif fonctionnel de description de système d'automatisation de bâtiment.

18. Système selon l'une des revendications 14 à 17, l'unité de fourniture (10) et/ou l'unité de détermination (20) étant conçue pour effectuer la fourniture et/ou la détermination avec prise en compte d'au moins un effet d'au moins une mesure permettant d'influer sur le niveau de climatisation de zone de bâtiment.

19. Système selon l'une des revendications 14 à 18, l'unité de détection et/ou l'unité de lecture étant conçues pour effectuer la détection et/ou la lecture
- au moins temporairement pendant le fonctionnement du système d'automatisation du bâtiment, et/ou
- lorsqu'une seule mesure est mise en œuvre pour influer sur l'au moins une grandeur de climatisation de zone de bâtiment et/ou
- avant ou pendant la mise en œuvre d'au moins une mesure pour influer sur le niveau de climatisation de zone de bâtiment.

20. Système selon l'une des revendications 14 à 19, comprenant une unité de détermination qui est conçue pour déterminer une dépense de temps et/ou dépense d'énergie nécessaires pour obtenir au moins un niveau de climatisation de zone de bâtiment à atteindre et/ou au moins une variation de niveau de climatisation de zone de bâtiment à atteindre à un instant spécifiable par l'utilisateur.

21. Système selon l'une des revendications 14 à 20, comprenant une unité de détermination (20) qui est conçue pour déterminer l'instant le plus tard possible pour activer au moins une mesure permettant d'influer sur le niveau de climatisation de zone de bâtiment de façon à obtenir au moins un niveau de climatisation de zone de bâtiment à atteindre et/ou au moins une variation de niveau de climatisation de zone de bâtiment à atteindre, ce qui permet d'éviter de climatiser inutilement la zone de bâtiment.

22. Système selon la revendication 21, comprenant une unité d'activation qui est conçue pour activer automatiquement au moins une mesure permettant d'influer sur le niveau de climatisation de zone de bâtiment à l'instant le plus tard possible.

23. Système selon l'une des revendications 14 à 22, l'unité de détermination et/ou une unité de commande prévue étant conçues pour commander au moins une mesure permettant d'influer sur le niveau de climatisation de zone de bâtiment de façon à obtenir ou maintenir l'au moins un niveau de climatisation de zone de bâtiment atteint ou à atteindre et/ou l'au moins une variation de niveau de climatisation de zone de bâtiment atteinte ou à atteindre de manière optimisée en temps et/ou en énergie ou avec une préférence spécifiable par l'utilisateur.

24. Système selon l'une des revendications 14 à 23, l'unité de détermination et/ou une unité de commande prévue étant conçues pour commander au moins une mesure permettant d'influer sur le niveau de climatisation de zone de bâtiment sur la base de, ou en réaction à, l'un au moins des éléments suivants :
- au moins une condition marginale détectée sensiblement actuellement,
- au moins une condition marginale variable ou au moins modifiée sensiblement actuellement,
- au moins un effet d'au moins une mesure permettant d'influer sur le niveau de climatisation de zone de bâtiment.

25. Système selon l'une des revendications 14 à 24, comprenant l'un au moins des éléments suivants :
- un dispositif d'affichage permettant à un utilisateur d'afficher les informations déterminées, calculées, récupérées, détectées et/ou lues,
- un dispositif de détection permettant de détecter par capteur le niveau de climatisation de zone de bâtiment, le niveau de climatisation extérieur et/ou la consommation d'énergie, l'efficacité du niveau de climatisation et/ou les performances d'au moins une mesure permettant d'influer sur le niveau de climatisation de la zone de bâtiment,
- une mémoire d'information destinée à stocker et/ou fournir les informations fournies, calculées, détectées, acquises et/ou lues.

26. Logiciel qui, lorsque le programme d'ordinateur est exécuté par une unité de traitement de données ou un système de commande, ordonne la réalisation des étapes selon la revendication 1.

27. Logiciel selon la revendication 26, qui, lorsqu'il est exécuté par l'unité de traitement de données ou le système de commande, ordonne la réalisation des étapes selon l'une des revendications 2 à 13.

28. Ordinateur, unité de traitement de données, système de commande ou support lisible par ordinateur, comprenant un logiciel selon l'une des revendications 26 à 27.
